# EUROPEAN PATENT APPLICATION

(11) **EP 4 844 826 A1**
(43) Date of publication of application: **25.11.2026**
(21) Application number: 25852902.3
(22) Date of filing: 28.03.2025
(51) Int. Cl.: H01M 4/136

(54) **LITHIUM-ION SECONDARY BATTERY, BATTERY APPARATUS, ELECTRIC APPARATUS, PREPARATION METHOD FOR POSITIVE ELECTRODE ACTIVE MATERIAL, AND PREPARATION METHOD FOR POSITIVE ELECTRODE SHEET**

(71) Applicant: Contemporary Amperex Technology Co., Limited, Ningde, Fujian 352100 (CN)
(72) Inventor: LI, Xiaojing, Ningde Fujian 352100 (CN); LIU, Hongyu, Ningde Fujian 352100 (CN); BIE, Changfeng, Ningde Fujian 352100 (CN); JIA, Xiaoyang, Ningde Fujian 352100 (CN); HE, Siyuan, Ningde Fujian 352100 (CN); NI, Huan, Ningde Fujian 352100 (CN); LIU, Na, Ningde Fujian 352100 (CN)
(74) Representative: Gong, Jinping
(86) International application number: PCT/CN2025/085902
(87) International publication number: WO 2026/199512

(57) **Abstract**

The present application provides a lithium-ion secondary battery, a battery apparatus, a power consuming apparatus, a method for preparing a positive electrode active material, and a method for preparing a positive electrode plate. The lithium-ion secondary battery includes a positive electrode plate, a negative electrode plate, and an electrolyte. The positive electrode plate includes a positive electrode current collector and a positive electrode film layer disposed on at least one side of the positive electrode current collector. The positive electrode film layer includes a positive electrode active material. The positive electrode active material includes lithium-containing transition metal phosphate particles whose surfaces are at least partially provided with a carbon coating material. In a cross section of the positive electrode film layer in a thickness direction of the electrode plate, an area proportion of particles having a particle size of greater than or equal to 1 µm is 30.0% to 50.0%, and a mass proportion of a magnetic material in the positive electrode film layer is greater than or equal to 20 ppm and less than or equal to 1980 ppm.

## Description

### TECHNICAL FIELD

The present application relates to the technical field of lithium-ion batteries, and in particular, to a lithium-ion secondary battery, a battery apparatus, a power consuming apparatus, a method for preparing a positive electrode active material, and a method for preparing a positive electrode plate.

### BACKGROUND

In recent years, lithium-ion secondary batteries are widely used in energy storage power supply systems such as hydroelectric power stations, thermal power stations, wind power stations, and solar power stations, as well as various fields such as electric tools, electric bicycles, electric motorcycles, electric vehicles, military equipment, and aerospace.

As increasingly high requirements are imposed on the range and safety of power consuming apparatuses in the markets, higher requirements are also imposed on the energy density, storage performance, and the like of lithium-ion secondary batteries. However, in the prior art, it is difficult to improve all the foregoing performance at the same time, which becomes a technical problem that needs to be resolved urgently in the art.

### SUMMARY

The present application is disclosed in view of the foregoing issue, and is intended to provide a lithium-ion secondary battery which has both high energy density and good storage performance.

A first aspect of the present application provides a lithium-ion secondary battery, including a positive electrode plate, a negative electrode plate, and an electrolyte. The positive electrode plate includes a positive electrode current collector and a positive electrode film layer disposed on at least one side of the positive electrode current collector. The positive electrode film layer includes a positive electrode active material. The positive electrode active material includes lithium-containing transition metal phosphate particles whose surfaces are at least partially provided with a carbon coating material. In a cross section of the positive electrode film layer in a thickness direction of the electrode plate, an area proportion of particles having a particle size of greater than or equal to 1 µm is 30.0% to 50.0%, and a mass proportion of a magnetic material in the positive electrode film layer is greater than or equal to 20 ppm and less than or equal to 1980 ppm.

In this example of the present application, the area proportion of large-size particles is increased, and meanwhile the content of the magnetic material in the positive electrode film layer is effectively reduced, so that the mass proportion of the magnetic material in the positive electrode film layer is greater than or equal to 20 ppm and less than or equal to 1980 ppm. In the lithium-ion secondary battery, a low self-discharge rate can be maintained while a compaction density of the electrode plate is increased, helping to increase the energy density of the battery and maintain it for a long time during storage.

In any of embodiments, in a cross section of the positive electrode film layer in a thickness direction of the electrode plate, an area proportion of particles having a particle size of 1 µm to 5 µm is 30.0% to 50.0%.

In the cross section of the positive electrode film layer in the thickness direction of the electrode plate, the area proportion of the particles having a particle size of 1 µm to 5 µm being within the above range can increase the compaction density of the electrode plate through grading as well as control the content of the magnetic material in the battery, helping to increase the energy density of the lithium-ion secondary battery and maintain it for a long time during storage.

In any of embodiments, in the cross section of the positive electrode film layer in the thickness direction of the electrode plate, the area proportion of the particles having a particle size of 1 µm to 5 µm is 30.0% to 45.0%.

In the cross section of the positive electrode film layer in the thickness direction of the electrode plate, the area proportion of the particles having a particle size of 1 µm to 5 µm being within the above range can improve the compaction density and capacity storage stability as well as further ensure a migration distance of lithium ions inside the particles, allowing the lithium-ion secondary battery to maintain a relatively low impedance, thereby improving the kinetic performance of the battery.

In any of embodiments, in the cross section of the positive electrode film layer in the thickness direction of the electrode plate, an average equivalent area proportion of particles having a particle size of 1 µm or more is 0.05% to 0.20%.

In the cross section of the positive electrode film layer in the thickness direction of the electrode plate, the average equivalent area proportion of the particles having a particle size of 1 µm or more is within the above range, meaning that the cross section of the positive electrode film layer in the thickness direction of the electrode plate not only has a certain quantity of large particles to improve the compaction density of the electrode plate, without seriously deteriorating the kinetic performance of the lithium-ion secondary battery due to an excessively large particle size of the large particles, so that both the energy density and the kinetic performance of the battery are ensured.

In any of embodiments, in the cross section of the positive electrode film layer in the thickness direction of the electrode plate, an area proportion of particles having a particle size of 50 nm to 200 nm is 3.0% to 15.0%, optionally 5.0% to 12.0%, further optionally 5.0% to 10.0%.

The area proportion of the particles having a particle size of 50 nm to 200 nm is within the foregoing range, meaning that there are a certain quantity of particles having a size of 50 nm to 200 nm. This helps to increase a powder compaction density of the positive electrode active material and the compaction density of the electrode plate through grading, thereby further increasing the energy density of the lithium-ion secondary battery.

In any of embodiments, a mass proportion of a magnetic material in the positive electrode film layer is less than or equal to 300 ppm, optionally 20 ppm to 200 ppm.

The mass content of the magnetic material being within the above range can further alleviate self discharge and improve the capacity storage stability of the battery.

In any of embodiments, the magnetic material includes one or more of Fe, Fe₂P, FeP, γ-Fe₂O₃, and Fe₂P₂O₇.

In any of embodiments, a mass content of elemental iron in the positive electrode film layer is less than 20 ppm, optionally less than or equal to 15 ppm.

Controlling the mass content of elemental iron within the above range helps to improve the safety of the battery.

In any of embodiments, the lithium-containing transition metal phosphate includes a component represented by the following general formula: LiₘFeₓP_{y}OⱼQ_{q} , where Q includes one or more of Al, Na, K, Mg, Cu, Mn, Cr, Zn, Pb, Ca, Co, Ni, Sr, Nb, V, Ti, B, S, Si, N, F, Cl, and Br, 0.8 ≤ m ≤ 1.15, 0.9 ≤ x ≤ 1, 0.95 ≤ y ≤ 1, 3.5 ≤ j ≤ 4, and 0 < q ≤ 0.1.

Selecting a proper modifying element Q can improve a lattice change rate of the positive electrode active material during lithium intercalation and deintercalation, reduce oxygen activity on the surfaces of the particles, and improve the structural stability of the material, thereby increasing the gram capacity utilization level of the material, and further improving the energy density of the lithium-ion secondary battery.

In any of embodiments, the positive electrode active material includes element titanium, and based on a total mass of the positive electrode active material, a mass content of element titanium is 1500 ppm to 8000 ppm, optionally 2500 ppm to 8000 ppm, and further optionally 2500 ppm to 6000 ppm.

The positive electrode active material includes element titanium and the mass content is controlled to be within the above range. This, on one hand, inhibits and stops particle growth, and achieves a purpose of controlling a size of large particles, so that in the cross section of the positive electrode film layer in the thickness direction of the electrode plate, an average equivalent area proportion of particles having a particle size of 1 µm or more is within an appropriate range. On the other hand, a possibility of uneven local chemical reaction of a raw material and generation of a magnetic material is reduced by virtue of surface inertness thereof. In addition, doping of element titanium in the positive electrode active material can increase the electronic conductivity and ion transport rate of the lithium-containing transition metal phosphate, and alleviate a negative effect of particles having a relatively large particle size on the kinetic performance of the positive electrode active material. Due to the effect on the particle size of the particles and the lithium ion transport path, both the energy density and the kinetic performance of the battery are ensured.

In any of embodiments, based on a total mass of the positive electrode active material, a mass proportion of element carbon is 0.9% to 1.8%.

Based on the total mass of the positive electrode active material, the mass proportion of element carbon being within the above range can not only increase the electronic conductivity of the positive electrode active material, but also improve the kinetic performance of the lithium-ion secondary battery. In addition, a negative effect of an excessively high carbon content on a loading capacity of the lithium-containing transition metal phosphate can be reduced, both the compaction density of the electrode plate and the impedance of the lithium-ion secondary battery are ensured, and the energy density and the kinetic performance of the battery are also improved.

In any of embodiments, in a cumulative distribution curve of graphitization degree C values of the positive electrode film layer that are obtained in a surface scanning mode of a laser micro-confocal Raman spectrometer, a median C₅₀ of the graphitization degrees is greater than or equal to 0.9 and less than or equal to 1.3, optionally 0.99 to 1.2. The graphitization degree C value is I_{G}/I_{D}. I_{G} represents the intensity of a G peak at 1580±100 cm⁻¹ in a Raman spectrum, and I_{D} represents the intensity of a D peak at 1350±100 cm⁻¹ in the Raman spectrum.

The positive electrode active material having a graphitization degree within the above range can easily achieve particle slippage during film formation through rolling of a graphitized carbon layer on the surface of the positive electrode active material, to counteract the negative effect of the particle size on the compaction density of the electrode plate, thereby further increasing the compaction density of the positive electrode film layer through particle slippage.

In any of embodiments, in a cumulative sphericity area distribution curve of particles obtained from the cross section of the positive electrode film layer in the thickness direction of the electrode plate, a median L_{A50} of the sphericity is 0.60 to 0.85, optionally 0.65 to 0.80.

Particles of which the median L_{A50} of the sphericity is within the above range are approximately spherical. The particles are prone to slippage under the action of an external force. This can further improve the compaction density of the electrode plate and increase the energy density of the battery.

In any of embodiments, a powder compaction density of the positive electrode active material under a pressure of 3T is 2.48 g/cm³ to 2.76 g/cm³, optionally 2.58 g/cm³ to 2.76 g/cm³.

The positive electrode active material has a high powder compaction density, providing a material basis for increasing the compaction density of the electrode plate and producing a high-energy-density lithium-ion secondary battery.

In any of embodiments, the powder compaction density of the positive electrode active material under a pressure of 3T is 2.58 g/cm³ to 2.76 g/cm³.

The positive electrode active material having a compaction density within the above range can further improve the compaction density of the electrode plate, and increase the energy density of the battery.

In any of embodiments, a discharge gram capacity of the positive electrode active material at room temperature at a discharge rate of 1 C is 135 mAh/g to 150 mAh/g.

The positive electrode active material has a high discharge gram capacity, indicating that the positive electrode active material has good kinetic performance and helps to increase the energy density of the lithium-ion secondary battery.

In any of embodiments, a discharge capacity proportion η of the positive electrode active material discharged to 3.2 V is greater than or equal to 85%. η is defined as follows. At room temperature, a button battery including the positive electrode active material is charged and discharged twice at a constant current at a rate of 0.1 C within a voltage range of 2.0 V to 3.75 V, and then charged and discharged once at a constant current at a rate of 1 C. During the charge-discharge test at the rate of 1 C, a capacity value at the discharge voltage of 3.2 V is extracted and recorded as C1, a capacity value at the discharge voltage of 2.0 V is extracted and recorded as C2, and η=C1/C2. A charging process includes constant-voltage charging with a constant voltage of 3.75 V and a constant-voltage cutoff current of 50 µA.

In the battery of these examples of the present application, a high discharge capacity proportion of the positive electrode active material discharged to 3.2V indicates that although the positive electrode active material contains a certain proportion of large-size particles, it still maintains good kinetic performance. In addition, the large value of η indicates that the lithium-ion secondary battery containing the positive electrode active material still has a high voltage when discharged to a low state of charge (SOC), which helps to maintain good power performance.

In any of embodiments, the positive electrode film layer further includes a binder and a conductive agent. Based on a total mass of the positive electrode film layer, a mass content of the positive electrode active material is 94% to 99.4%, a mass content of the binder is 0.5% to 3%, and a mass content of the conductive agent is 0.1% to 3%.

In any of embodiments, an areal density of the positive electrode film layer on each side is 300 mg/1540 mm² to 450 mg/1540 mm².

The positive electrode film layer having an areal density within the above range can help to increase the energy density of the lithium-ion secondary battery.

In any of embodiments, when the lithium-ion secondary battery is in a fully discharged state, a compaction density of the positive electrode film layer is 2.43 g/cm³ to 2.78 g/cm³.

In any of embodiments, when the lithium-ion secondary battery is in a fully discharged state, the compaction density of the positive electrode film layer is 2.50 g/cm³ to 2.75 g/cm³.

In any of embodiments, when the lithium-ion secondary battery is in a fully discharged state, the compaction density of the positive electrode film layer is 2.43 g/cm³ to 2.78 g/cm³, and in the cross section of the positive electrode film layer in the thickness direction of the electrode plate, a porosity of the positive electrode film layer is 10% to 28%.

In any of embodiments, when the lithium-ion secondary battery is in a fully discharged state, the compaction density of the positive electrode film layer is 2.5 g/cm³ to 2.78 g/cm³, and in the cross section of the positive electrode film layer in the thickness direction of the electrode plate, the porosity of the positive electrode film layer is 10% to 22%.

On one hand, a lower porosity indicates better grading of large, medium and small particles in the positive electrode film layer and higher compaction density. On the other hand, after the same grading and rolling pressure, a low porosity means that the particles are more likely to slip to each other, reducing the risk of overpressure and stress concentration in the film layer, and further reducing the possibility of demolding of a positive electrode film during a long cycling process, thereby helping to improve the long cycling performance of the battery. In any of embodiments, the positive electrode plate includes a base coating, and the base coating is disposed between the positive electrode film layer and the current collector. The base coating includes carbon-based particles, and a distribution density of carbon-based particles having a particle size greater than 100 nm in the base coating is less than or equal to 10 pcs/10 µm.

The base coating helps to enhance the conductivity and adhesion force between the positive electrode film layer and the current collector, reducing the demolding of the positive electrode film layer from the current collector during the cycling process, and meanwhile, improving the kinetic performance of the battery. In the high-compaction-density electrode plate of these examples of the present application, for example, when the compaction density of the positive electrode plate in a fully discharged state is greater than or equal to 2.4 g/cm³, the current collector is prone to damage during a high-pressure compaction process of the electrode plate, and large-size particles are likely to form recesses on the current collector. Controlling the distribution density of the carbon-based particles having a particle size greater than 100 nm in the base coating to be less than or equal to 10 pcs/10 µm helps to reduce the possibility of damage to the current collector in the high-compaction-density electrode plate and further improve the maximum compaction density of the positive electrode plate.

In any of embodiments, the positive electrode plate includes a base coating, and the base coating is disposed between the positive electrode film layer and the current collector. A compaction density of the positive electrode plate in a fully discharged state is greater than or equal to 2.4 g/cm³, and a thickness of the base coating on each side is 1 µm to 4 µm.

In any of embodiments, the positive electrode plate includes a base coating, and the base coating is disposed between the positive electrode film layer and the current collector. A compaction density of the positive electrode plate in a fully discharged state is greater than or equal to 2.5 g/cm³, and a thickness of the base coating on each side is 2 µm to 4 µm.

As the compaction density of the electrode plate increases, a large-particle lithium-containing phosphate material (for example, having a particle size greater than 1 µm) in the positive electrode film layer compresses the base coating more significantly. Therefore, stress concentration easily occurs at large particle sites, and the current collector is even damaged by large particles passing through the base coating. Increasing the thickness of the base coating helps to alleviate the stress concentration in the electrode plate, and further increases the maximum compaction density of the electrode plate.

A second aspect of the present application provides a battery apparatus, including the lithium-ion secondary battery provided by the first aspect of the present application. The battery apparatus includes at least one of a battery module, a battery pack, and an energy storage battery.

A third aspect of the present application further provides a power consuming apparatus. The power consuming apparatus includes the lithium-ion secondary battery provided by the first aspect of the present application or the battery apparatus provided by the second aspect of the present application.

A fourth aspect of the present application further provides a method for preparing a positive electrode active material, including: obtaining a raw material mixture including a carbon source, a lithium source, an iron source, and a phosphorus source, where a molar ratio of lithium to iron in the raw material mixture is greater than 1 and less than 1.05; grinding the raw material mixture to obtain a slurry mixture, where a solid-phase volume distribution particle size DV50 of the slurry mixture is 0.3 µm to 0.4 µm; drying the slurry mixture to obtain precursor powder; and sintering the precursor powder to obtain a positive electrode active material. The sintering is performed in an inert gas atmosphere, with a total gas flow rate of 1100 m³/h to 1400 m³/h during the sintering process. The sintering includes a temperature-rise stage and a constant-temperature stage. An inert gas inflow rate v1 during the temperature-rise stage is higher than an inert gas inflow rate v2 during the constant-temperature stage. A temperature in the constant-temperature stage during the sintering is from 770°C to 830°C. The positive electrode active material includes lithium-containing transition metal phosphate particles whose surfaces are at least partially provided with a carbon coating layer material.

According to the positive electrode active material prepared by using the method, the cross section of the positive electrode film layer in the thickness direction of the electrode plate has particles having a size of 1 µm or more and accounting for a certain area proportion, and the positive electrode active material contains a small amount of magnetic material, increasing the compaction density of the electrode plate and improving the energy density of the lithium-ion secondary battery as well as allowing the battery to have a low self-discharge level, so that the energy density of the lithium-ion secondary battery is maintained for a long time during storage and cycling of the battery.

A fifth aspect of the present application provides a method for preparing a positive electrode plate. The method includes: sequentially adding a binder, a conductive agent, and a positive electrode active material prepared using the method provided by the fourth aspect, dry-mixing the same, adding a solvent, stirring the resulting mixture to obtain a slurry product, transfer-coating the slurry product onto at least one side of a current collector, and then performing drying and hot pressing to obtain a positive electrode plate.

In any of embodiments, the hot pressing includes at least three times of hot rolling. A hot rolling pressure increases sequentially. The hot pressing pressures are sequentially 20 ton to 50 tons, 50 tons to 70 tons, and 70 tons to 90 tons. A hot rolling temperature is 40°C to 80°C. Before the first hot rolling for compaction, the electrode plate is heated, and the heating is performed at a temperature of 40°C to 50°C.

The positive electrode active material prepared by using the above hot pressing process in combination with the method according to the fourth aspect effectively increases the compaction density of the positive electrode plate while maintaining a low content of the magnetic material, allowing the battery to have improved energy density while maintaining low self-discharge.

In any of embodiments, the transfer-coating is performed at a speed of 1 m/min to 25 m/min.

The transfer-coating is performed at a speed within the above range, helping to improve the distribution uniformity of the particles during the coating process, reducing the risk of particle aggregation in the positive electrode film layer, and reducing the porosity of the cross section of the positive electrode film layer, thereby further increasing the maximum compaction density of the electrode plate, and improving the energy density of the battery.

### BRIEF DESCRIPTION OF THE DRAWINGS

FIG. 1 is a scanning electron microscope image of a cross section of a positive electrode film layer in a thickness direction of an electrode plate according to an embodiment of the present application;
FIG. 2 is a schematic view of a lithium-ion secondary battery according to an embodiment of the present application;
FIG. 3 is a schematic exploded view of a lithium-ion secondary battery according to an embodiment of the present application;
FIG. 4 is a schematic view of a battery module according to an embodiment of the present application;
FIG. 5 is a schematic view of a battery pack according to an embodiment of the present application;
FIG. 6 is a schematic exploded view of the battery pack shown in FIG. 5;
FIG. 7 is a schematic view of a power consuming apparatus using a lithium-ion secondary battery as a power source according to an embodiment of the present application; and
FIG. 8 is a porosity test view of a cross section of a positive electrode film layer in a thickness direction of an electrode plate according to an embodiment of the present application.

### Description of reference numerals:

1, battery pack; 2, upper box body; 3, lower box body; 4, battery module; 5, lithium-ion secondary battery; 51, case; 52, electrode assembly; and 53, top cover assembly.

### DETAILED DESCRIPTION

The following specifically discloses embodiments of a lithium-ion secondary battery, a battery apparatus, a power consuming apparatus, a method for preparing a positive electrode active material, and a method for preparing a positive electrode plate of the present application with appropriate reference to the accompanying drawings. However, there will be cases where unnecessary detailed descriptions are omitted. For example, there are cases where detailed descriptions of well-known matters and repeated descriptions of actually identical structures are omitted. This is to avoid unnecessary redundancy in the following descriptions and to facilitate the understanding by those skilled in the art. In addition, the accompanying drawings and the following descriptions are provided for those skilled in the art to fully understand the present application, and are not intended to limit the subject matter recited in the claims.

The "range" disclosed in the present application is defined in a form of a lower limit and an upper limit, a given range is defined by selecting a lower limit and an upper limit, and the selected lower limit and upper limit define boundaries of a particular range. A range defined in this manner may be inclusive or exclusive of end values, and any combination is available, meaning that any lower limit may be combined with any upper limit to form a range. For example, if ranges of 60 to 120 and 80 to 110 are listed for a particular parameter, it is to be understood that ranges of 60 to 110 and 80 to 120 are also expected. Additionally, if minimum range values of 1 and 2 are listed and maximum range values of 3, 4, and 5 are listed, the following ranges may all be expected: 1 to 3, 1 to 4, 1 to 5, 2 to 3, 2 to 4, and 2 to 5. In the present application, unless otherwise specified, a numerical range "a to b" represents an abbreviated representation of any combination of real numbers between a and b, where both a and b are real numbers. For example, a numerical range "0 to 5" indicates that all real numbers between "0 to 5" have been listed herein, and "0 to 5" is only an abbreviated representation of a combination of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application may be combined to form a new technical solution, and such a technical solution shall be included in the disclosed content of the present application.

Unless otherwise specified, all technical features and optional technical features of the present application may be combined to form a new technical solution, and such a technical solution shall be included in the disclosed content of the present application.

Unless otherwise specified, all steps of the present application may be performed sequentially or randomly, and preferably sequentially. For example, the phrase "the method includes step (a) and step (b)" indicates that the method may include step (a) and step (b) performed sequentially, or the method may include step (b) and step (a) performed sequentially. For example, the phrase "the method may further include step (c)" indicates that step (c) may be added to the method in any order. For example, the method may include step (a), step (b), and step (c), may include step (a), step (c), and step (b), or may include step (c), step (a), and step (b).

In the present application, the terms "a plurality of" and "various" means two or more.

Unless otherwise specified, terms used in the present application have well-known meanings generally understood by a person skilled in the art.

Unless otherwise specified, numerical values of parameters mentioned in the present application may be tested by using various test methods commonly used in the art, for example, testing may be performed according to a test method provided in the examples of the present application. Unless otherwise specified, the test temperature of the parameters is 25°C.

The battery mentioned in the examples of the present application may be a single physical module including one or more lithium-ion secondary batteries to provide a higher voltage and a higher capacity. For example, the battery mentioned in the present application may include a lithium-ion secondary battery, a battery cell, a battery module, a battery pack, or the like.

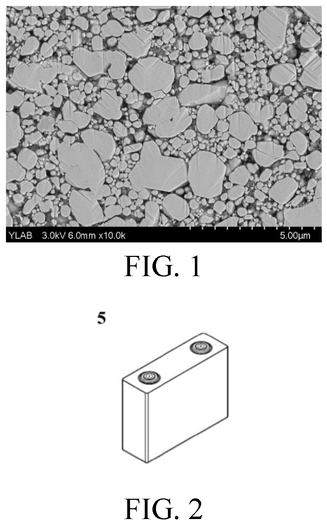

The lithium-ion secondary battery is the smallest unit constituting a battery, and can achieve functions of charging and discharging independently. The lithium-ion secondary battery may be in a cylindrical shape, a cuboid shape, or in other shapes, which is not limited in the examples of the present application. For example, FIG. 2 shows a lithium-ion secondary battery 5 of a cuboid structure as an example.

The lithium-ion secondary battery includes an electrode assembly and an electrolyte.

The lithium-ion secondary battery further includes an outer package. The outer package may be used for packaging the electrode assembly and the electrolyte. The outer package may be a hard shell, for example, a hard plastic shell, an aluminum shell, or a steel shell. The outer package may alternatively be a soft package, for example, a pouch-type soft package. The material of the soft pack may plastic, for example, one or more of polypropylene (PP), polybutylene terephthalate (PBT), and polybutylene succinate (PBS).

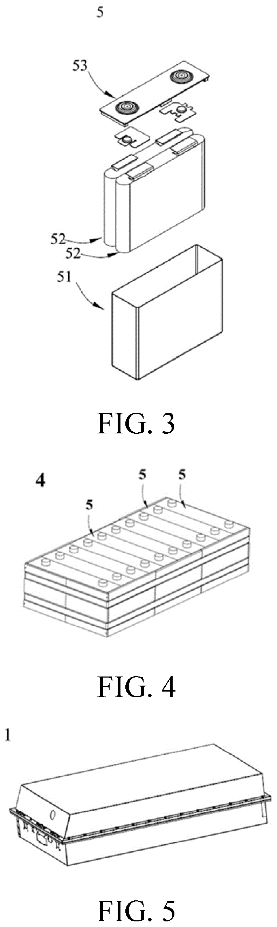

In some embodiments, as shown in FIG. 3, the outer package may include a case 51 and a cover plate 53. The case 51 may include a bottom plate and a side plate connected to the bottom plate. The bottom plate and the side plate define an accommodating cavity. The case 51 has an opening in communication with the accommodating cavity. The cover plate 53 is configured to cover the opening, to close the accommodating cavity. The electrode assembly 52 is packaged in the accommodating cavity. The lithium-ion secondary battery 5 may include one or more electrode assemblies 52, and this may be adjusted according to requirements.

The electrode assembly usually includes a positive electrode plate and a negative electrode plate. The negative electrode plate is an electrode in which reactions of lithium ion absorption or lithiation during charging and lithium release or delithiation during discharging take place. The positive electrode plate is an electrode in which reactions of lithium release or delithiation during charging and lithium ion absorption or lithiation during discharging take place.

When there are a plurality of lithium-ion secondary batteries, the plurality of lithium-ion secondary batteries are connected in series, parallel, or series-parallel. In some embodiments, the battery may be a battery module. When there are a plurality of lithium-ion secondary batteries, the plurality of lithium-ion secondary batteries are arranged and fixed to form one battery module. In some embodiments, the battery may be a battery pack. The battery pack includes a box and a lithium-ion secondary battery, and the lithium-ion secondary battery or the battery module is accommodated in the box. In some embodiments, the box may be used as a part of a chassis structure of a vehicle. For example, a part of the box may be at least a part of a floor of the vehicle, or a part of the box may be at least a part of a cross beam and a longitudinal beam of the vehicle.

In some embodiments, the battery may be an energy storage apparatus. The energy storage apparatus includes an energy storage container, an energy storage electric cabinet, and the like.

In some embodiments, the lithium-ion secondary battery may be assembled into a battery module. There may be a plurality of lithium-ion secondary batteries included in the battery module, and a specific quantity may be adjusted based on application and capacity of the battery module. FIG. 4 is a schematic view of a battery module 4 as an example. As shown in FIG. 4, in the battery module 4, a plurality of lithium-ion secondary batteries 5 may be sequentially arranged in a length direction of the battery module 4. Certainly, the plurality of lithium-ion secondary batteries may alternatively be arranged in any other manner. The plurality of lithium-ion secondary batteries 5 may further be fixed by fasteners.

Optionally, the battery module 4 may further include a housing having an accommodating space, and the plurality of lithium-ion secondary batteries 5 are accommodated in the accommodating space.

In some embodiments, the battery module may further be assembled into a battery pack, and a quantity of the battery modules included in the battery pack may be adjusted based on application and capacity of the battery pack.

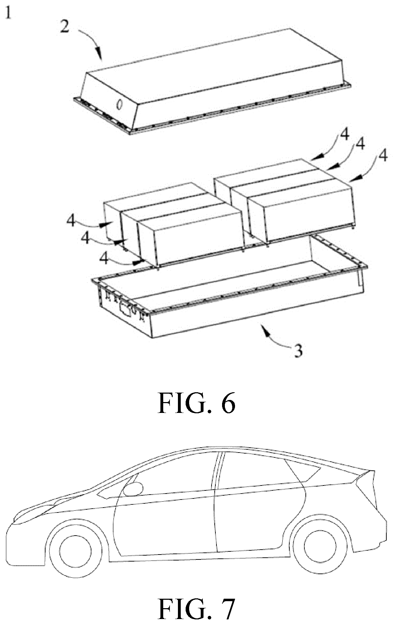

FIG. 5 and FIG. 6 are schematic views of a battery pack 1 as an example. As shown in FIG. 5 and FIG. 6, the battery pack 1 may include a box and a plurality of battery modules 4 disposed in the box. The box includes an upper box body 2 and a lower box body 3. The upper box body 2 is configured to cover the lower box body 3 to form an enclosed space for accommodating the battery modules 4. The plurality of battery modules 4 may be arranged in the box in any manner.

Lithium-containing transition metal phosphate materials have been widely used in lithium-ion batteries due to their characteristics of stable structure, good safety, and long cycle life. However, the low electronic conductivity and low packing efficiency thereof result in a low loading capacity of active materials in batteries, causing a failure in meeting the requirements on high energy density of batteries.

Research has shown that increasing the quantity and proportion of large-size particles in the lithium-containing transition metal phosphate material is an effective manner for increasing the powder compaction density and increasing the loading capacity of the positive electrode active material in the battery. Formation of the lithium-containing transition metal phosphate material usually requires a high-temperature sintering process of the raw materials. A larger particle size of the particles usually indicates more solid phase diffusion and more crystal boundary fusion between the raw materials as well as higher energy consumption and higher sintering temperature. However, experimental results show that the battery having lithium-containing transition metal phosphate particles with a large particle size is usually accompanied with high self-discharge. Researchers have found that this is because, as the sintering temperature of the lithium-containing transition metal phosphate material increases, the lithium-containing transition metal phosphate material is likely to undergo a carbothermal reduction reaction at lattice defect sites thereof, and is reduced into a magnetic material such as Fe and Fe₂P by carbon on a surface of the lithium-containing transition metal phosphate material and other reducing materials (such as hydrogen and carbon monoxide) generated in a preparing process. Therefore, an increase in the large-size particles in the positive electrode active material is usually accompanied with an increase in the content of the magnetic material. In charging and discharging processes of a lithium-ion secondary battery, a magnetic material is likely to cause agglomeration and growth of an organic material in an electrolyte to form a corner or a sharp stab that is likely to puncture a separator, forming a micro short circuit inside the lithium-ion secondary battery, and generating a current leakage path. Consequently, when the battery is not connected to an external load, the power of the battery is gradually reduced, that is, self-discharge is increased, deteriorating long-term use performance of the lithium-ion secondary battery.

A first aspect of the present application provides a lithium-ion secondary battery, including a positive electrode plate, a negative electrode plate, and an electrolyte. The positive electrode plate includes a positive electrode current collector and a positive electrode film layer disposed on at least one side of the positive electrode current collector. The positive electrode film layer includes a positive electrode active material. The positive electrode active material includes lithium-containing transition metal phosphate particles whose surfaces are at least partially provided with a carbon coating material. In a cross section of the positive electrode film layer in a thickness direction of the electrode plate, as shown in FIG. 1, an area proportion of particles having a particle size greater than or equal to 1 µm is 30% to 50%, and a mass proportion of a magnetic material in the positive electrode film layer is greater than or equal to 20 ppm and less than or equal to 1980 ppm.

When the area proportion of the particles having a particle size greater than or equal to 1 µm in the positive electrode film layer is less than 30%, it is difficult to achieve a high compaction density of the positive electrode plate. When the area proportion of the particles having a particle size greater than or equal to 1 µm in the positive electrode film layer is greater than 50%, the sintering temperature or the sintering time needs to be increased, and the content of the magnetic material is increased accordingly, causing an increase in a self-discharge K value of a battery cell. While the area proportion of the particles having a particle size greater than or equal to 1 µm is controlled to be 30.0% to 50.0%, the content of the magnetic material can be reduced in a manner such as adjusting a gas flow rate, so that the mass proportion of the magnetic material in the positive electrode film layer is greater than or equal to 20 ppm and less than or equal to 1980 ppm, thereby reducing self discharge of the battery while increasing the compaction density of the electrode plate.

In the cross section of the positive electrode film layer in the thickness direction of the electrode plate, the area proportion of the particles having a particle size greater than or equal to 1 µm being 30.0% to 50.0% can fully exert the effect of grading during manufacturing and cycling of the electrode plate, thereby effectively increasing the compaction density of the electrode plate. However, preparation of a positive electrode active material including particles having an area proportion within the above range usually requires a long time of high-temperature sintering, causing an increase in the content of the magnetic material. In this example of the present application, the area proportion of large-size particles is increased, and meanwhile the content of the magnetic material in the positive electrode film layer is effectively reduced, so that the mass proportion of the magnetic material in the positive electrode film layer is greater than or equal to 20 ppm and less than or equal to 1980 ppm. In the lithium-ion secondary battery, a low self-discharge rate can be maintained while a compaction density of the electrode plate is increased, helping to increase the energy density of the battery and maintain it for a long time during storage. In the present application, the term "particle" refers to a particle whose complete boundary can be recognized in a field of view of the positive electrode film layer at a certain magnification such as 10 thousand times. A defect or scratch may exist in the particle, but a complete boundary sufficient for dividing the particle cannot be recognized in the particle.

A particle recognition method is specifically as follows: cutting the positive electrode film layer in the thickness direction of the electrode plate by using an argon ion beam (as an example, a device model of Leica EM TIC 3X CP may be optionally used, with a working voltage of 6 kV, and a working duration of 6 h); and after a cross section is exposed, observing the cross section of the positive electrode film layer in the thickness direction of the electrode plate by using a scanning electron microscope (as an example, a device model of Hitachi SU8230 may be optionally used, with a working voltage of 3 kV, a high beam current, a probe model of U (LA100), and a working distance of less than 5 mm). An image is collected by using a field emission scanning electron microscope in a secondary electronic mode at a non-edge position in a cross section of the positive electrode film layer (after an edge of the electrode plate is observed under the scanning electron microscope, a field of view is adjusted to a central part of a sample). An electron microscope image is photographed at a magnification of 10k times, and particles in the electron microscope image are analyzed by using ImageJ software (1.46 r, win64 version). A method for using the ImageJ software is specifically as follows: loading a scanning electron microscope image to be analyzed, as shown in FIG. 1; recognizing particles by using Cellpose plug-in software therein; performing manual calibration based on the recognition; and reading and performing statistical analysis on data by using Image J. A specific method for recognizing the particles by using the Cellpose plug-in software is as follows: setting a segmentation diameter parameter (diameter in a Segmantation module) as 15 pixels, and clicking "run cyto3" to perform particle recognition, and then manually recognizing, in the image, particles that are not recognized by software, that are not completely recognized by software, or that are recognized with an error. The particles that are not recognized by software, that are not completely recognized by software, or that are recognized with an error mainly include the following types: 1, the particles cannot be recognized or cannot be completely recognized because the particles are excessively large or have a scratch on the surface; 2, during a segmentation process of the argon ion beam, a scratch may be generated on the surface of the particles, and during a recognition process, the software may incorrectly determine the scratch as a particle boundary, thereby generating a recognition error; 3, excessively small particles are not successfully recognized; and 4, the particles are located at an edge of a field of view of the electron microscope, the interiors of the particles are penetrated by the edge, and the topography is not completely presented, so that a partial part instead of an entire part is recognized, causing a recognition error. A specific process of manually calibrating a particle that is not recognized or that is recognized with an error is as follows: deleting a large particle that is not completely displayed and that is located at a peripheral edge of the scanning electron microscope; determining whether there is a gap or scratch in another particle that is not recognized or that is recognized with an error; if there is no gap or scratch in the particle, determining that the particle is one particle, and manually identifying the particle according to a particle boundary observed manually; determining, in response to a gap or scratch being present inside the particle, whether the gap or scratch penetrates through the particle, and if the gap or scratch does not penetrate through the particle, determining that the gap or scratch is one particle, and performing manual identification; determining, in response to the gap or scratch penetrating through the particle, whether the gap or scratch is linear or irregular; determining, in response to the gap or scratch being irregular, that the gap or scratch is a boundary between particles, and performing particle division along the boundary; in response to the gap or scratch being linear, performing contrast comparison; in response to the contrast comparison being not obvious and there being no sense of crack, determining that there is a scratch, and identifying the gap or scratch as one particle; and in response to the contrast comparison being strong and there being a sense of crack, determining the gap or scratch as a boundary between particles, and identifying the gap or scratch as two particles. Information unrelated to particles in an automatic processing process of the image is deleted after the manual identification, to be specific, determining and identification of the particles in the image are completed.

In a compaction process, the positive electrode film layer is compacted in the thickness direction. Therefore, compared with the surface of the positive electrode film layer, the cross section of the positive electrode film layer in the thickness direction of the electrode plate can better reflect a real compaction situation of particles inside the film layer on a spatial scale. In the cross section of the positive electrode film layer in the thickness direction of the electrode plate, the area proportion of the particles having a particle size greater than or equal to 1 µm can directly reflect an area proportion relationship between some particles within this particle size range and all the particles, and reflect the area of the particles within this particle size range.

It can be understood that, the particles in the cross section of the positive electrode film layer in the thickness direction of the electrode plate, especially particles having a size of 50 nm or more are mainly from the positive electrode active material. Therefore, in this example of the present application, the observation and statistics of the area of the particles in the cross section of the positive electrode film layer can accurately and objectively reflect a distribution situation of the lithium-containing transition metal phosphate particles in the positive electrode film layer in the electrode plate.

In the prior art, the particle size of the positive electrode active material is usually statistically collected with a laser particle analyzer by using a Malvern laser diffraction method. However, the research of the applicant shows that the lithium-containing transition metal phosphate particles are prone to agglomeration, and usually, a test result obtained by using the Malvern laser diffraction method according to the laser scattering principle is a particle size of a particle agglomerate, which cannot truly reflect the particle size of the particles in the positive electrode active material, and even cannot reflect a dispersion state of the positive electrode active material in the film layer, because a degree of dispersion of the positive electrode active material in the film layer increases to some extent during slurry preparation and film-forming rolling processes. The test result obtained by using the Malvern laser diffraction method is affected by the particle size, specific surface area, and agglomeration degree of the positive electrode active material. Compared with a true dispersion situation in the electrode plate, a quantity of large particles obtained in the test is lower than an actual value, and a quantity of small particles obtained in the test is higher than an actual value. Therefore, the particle size obtained in the test using the Malvern laser diffraction method cannot be equivalent to or analogized to the particle size statistically collected in this example of the present application.

In some embodiments, in the cross section of the positive electrode film layer in the thickness direction of the electrode plate, the area proportion of the particles having a particle size greater than or equal to 1 µm is 30% to 50%.

A method for testing the area proportion of the particles having a particle size greater than or equal to 1 µm in the cross section of the positive electrode film layer in the thickness direction of the electrode plate is specifically as follows: recognizing the particles in the positive electrode film layer with reference to the method described above in the present application, uploading an image obtained after the particles are determined and recognized into ImageJ software for analysis; completing scale setting according to a scanning electron microscope image; and statistically analyzing the particle size, area, sphericity, and coarseness of the particles in the cross section of the positive electrode film layer in the thickness direction of the electrode plate by using "Feret diameter", "Area", "Round", and "Solidity" analysis functions. According to a software manual (ImageJ User Guide IJ1.46r), a "Feret" parameter obtained through analysis represents a maximum distance between all parallel lines in a two-dimensional projection of a particle, which is used to characterize a particle size of this particle. An "Area" parameter obtained represents a pixel area of a particle. A significant error occurs in a statistical process of particles having a particle size less than 50 nm and is difficult to recognize accurately, and a particle size of a conductive agent is usually less than 50 nm, which causes a significant error of a statistical result. Therefore, the particles having a particle size less than 50 nm are not statistically counted in a particle size statistical process of the present application, and statistical data of the particles corresponding to AR, Round, or Solidity of which a display result is "NaN" are deleted. A sum of "Area" parameters of the particles having a particle size greater than or equal to 1 µm and a sum of "Area" parameters of all the particles are calculated and respectively used as an area of the particles having a particle size greater than or equal to 1 µm and a statistical total area of the particles. The area sum of the particles having a particle size greater than or equal to 1 µm is divided by the statistical total area of the particles, and the result is used as an area proportion of the particles having a particle size greater than or equal to 1 µm in the cross section of the positive electrode film layer in the thickness direction of the electrode plate.

In some embodiments, in the cross section of the positive electrode film layer in the thickness direction of the electrode plate, the area proportion of the particles having a particle size greater than or equal to 1 µm is optionally 30%, 31%, 32%, 33%, 34%, 35%, 36%, 37%, 38%, 39%, 40%, 41%, 42%, 43%, 44%, 45%, 46%, 47%, 48%, 49%, 50%, or a range defined by any two of these values.

The lithium-containing transition metal phosphate refers to a phosphate material including element lithium and a transition metal element, and can be detected in any well-known manner in the art. For example, an X-ray diffractometer (XRD), an energy spectrum analyzer, and an inductively coupled plasma mass spectrometer may be cooperatively used for detection. As an example, the lithium-containing transition metal phosphate includes, but is not limited to, lithium iron phosphate, lithium manganese iron phosphate, and a dope material thereof.

The carbon coating layer disposed on at least a part of the surface of the lithium-containing transition metal phosphate can be detected in any well-known manner in the art. As an example, a transmission electron microscope and an energy spectrum analyzer are cooperatively used to characterize the lithium-containing transition metal phosphate, so that the carbon coating layer disposed on at least a part of the surface of the lithium-containing transition metal phosphate can be observed.

To fully utilize the capacity of the lithium-containing transition metal phosphate material so as to increase the energy density thereof, at least a part of the surface of the lithium-containing transition metal phosphate material is usually coated with a carbon layer to improve the conduction efficiency of electrons between the positive electrode active materials.

In the present application, the "magnetic material" refers to a material that can generate magnetism due to the action of a magnetic field.

The "mass content of the magnetic material in the positive electrode film layer" herein may be measured according to the following steps. A battery is disassembled to obtain a positive electrode plate, and the positive electrode plate is immersed with a dimethyl carbonate solvent for 8 hours. After drying, the positive electrode plate is sintered at 600°C for 2 hours in a nitrogen atmosphere. During the sintering, a positive electrode current collector on the positive electrode plate falls off. The sintered electrode plate is crushed by using a mortar and sieved through a 200-mesh sieve, to obtain positive electrode material power. Step 1: For example, 80 g of positive electrode material powder obtained by using the above reverse method is put into a plastic barrel, and added with 6 L of deionized water; a plastic tube is used to sleeve a magnetic bar (having a magnetic induction intensity of 6000 GS) with a size of φ24 mm × 240 mm; then, heat sealing is performed using a heat sealing clip; the magnetic bar is put into the plastic barrel and sealed together; and a rotating speed of a rolling drum is set to 60 revolutions/min, a mixing time is set to 15 min, and the sealed plastic barrel is placed on the rolling drum for mixing. Step 2: Another clean plastic barrel is prepared, 5±0.2 L of deionized water is added into the barrel, a magnetic material on the plastic tube is flushed into the barrel until there is no slurry block with an area greater than or equal to 0.5 cm² on the surface of the magnetic bar, and then the magnetic bar is placed in the clean plastic barrel. The plastic barrel is covered with a clean barrel cover; the plastic barrel is also placed on the rolling drum, where a rotating speed of a mixing tank of the rolling drum is 60 revolutions/min, and a mixing time is set to 15 min; and the sealed barrel is placed on a device for mixing. Step 2 is repeated at least twice to ensure the accuracy of an extraction amount of the magnetic material. Step 3: A clean 500 mL beaker is prepared; the magnetic bar is taken out of the barrel and put into the beaker, a washing bottle is used to flush all the magnetic material at the head of the plastic tube into the beaker, demagnetized scissors are used to cut open two sides of the head of a heat shrinkable tube, an upper edge part of the heat shrinkable tube is folded by 90°, the magnetic bar is pulled out, and then the magnetic bar is put into a magnetic bar arrangement region. The heat shrinkable tube is flushed in a zigzag manner from top to bottom using the washing bottle (the front side and the back side are each flushed at least three times), and the magnetic material is flushed into the beaker until no particles remain on the surface of the heat shrinkable tube (agglomerates that are difficult to flush are scrapped off using the back of a cleaned ceramic knife, and impurities attached to the ceramic knife are flushed into the beaker). The tube is lifted up so that the bottom of the tube is scoured at least three times, to ensure that all adsorbed magnetic material particles are collected. Step 4: (1) A small magnetic block is put at the bottom of the beaker for performing adsorption clockwise from the outside to the inside for at least three circles, and then performing adsorption along the bottom of the beaker anticlockwise from the outside to the inside for at least three circles. (2) Step (1) is repeated three rounds, and each round of adsorption lasts for not less than 10 s. (3) The small magnetic block is fixed to a central position of the bottom of the beaker by using a palm, and after left standing for 2 s, the beaker is slowly inclined to pour out the solution. (4) The beaker is arranged vertically and a washing bottle is used to flush the wall of the less beaker, to ensure that the attached magnetic material particles all enter the solvent, and a volume of the added solution is 100 ml to 150 ml. (5) Step (3) is repeated to perform rinsing 2 to 4 times, until a liquid in the beaker is clear (after the final rinsing, there is no need to add the solvent again). Step 5: First, 70 ml of deionized water is added to the beaker by using one syringe; then, 70 ml of hydrochloric acid with a concentration of 36% to 38% is slowly added to the beaker by using another syringe; and after the hydrochloric acid is diluted, the beaker is transferred to a fluoridation bottle with a sealing cap for storage. Step 6: (1) A syringe is used to inject 15±2 ml hydrochloric acid solution prepared in step 5 into the beaker with the magnetic material extracted, and then a mouth of the beaker is sealed with a sealing film. The beaker is put into an ultrasonic instrument to undergo an ultrasonic treatment for 2 min (at power of 200 w/a frequency of 53 KHz). After the ultrasonic treatment is completed, 100±10 ml of deionized water is injected into the beaker for cleaning, and the cleaning operation is repeated twice. 100 ml to 150 ml of deionized water is injected into the beaker for extraction filtration. A filter film having a pore size of 0.45 µm is used to collect magnetic material particles. The filter film to whose surface the magnetic material particles are attached is placed on a micro slide of a cleanliness microscope, and the micro slide is placed in an oven, and dried at 45°C for (15±2) min. An electronic balance is used to weigh a mass of the dried filter film (including the magnetic material particles), and the mass of the dried filter film is subtracted by a mass of a filter film with nothing, to obtain a mass of the magnetic material. A mass content of the magnetic material relative to a mass of a positive electrode material powder sample is calculated as a mass proportion of the magnetic material in the positive electrode film layer, measured in ppm.

In some embodiments, the mass proportion of the magnetic material in the positive electrode film layer is optionally 20 ppm, 100 ppm, 134.2 ppm, 200 ppm, 300 ppm, 400 ppm, 500 ppm, 1000 ppm, 1061.7 ppm, 1450.2 ppm, 1500 ppm, 1980 ppm, or a range defined by any two of these values.

A person skilled in the art can control the area proportion of the particles by using any known process. As an example, a particle size concentration ratio is adjusted according to scientific grading of particles having different particle sizes. The raw materials are processed into a target particle size distribution range by the action of a mechanical force of a crushing and grinding process, to realize adjustment of the particle size and concentration ratio of the particles. A screening and classifying device is used to perform particle size separation on a particle system, to obtain a particle size distribution meeting requirements. A feeding speed is precisely controlled to adjust a residence time and a stress state of the particles in the device, which also helps to realize the adjustment of the concentration ratio of the particles.

In some embodiments, in the cross section of the positive electrode film layer in the thickness direction of the electrode plate, an area proportion of particles having a particle size of 1 µm to 5 µm is 30% to 50%.

In some embodiments, in the cross section of the positive electrode film layer in the thickness direction of the electrode plate, the area proportion of the particles having a particle size of 1 µm to 5 µm is optionally 30%, 31%, 32%, 33%, 34%, 35%, 36%, 37%, 38%, 39%, 40%, 41%, 42%, 43%, 44%, 45%, 46%, 47%, 48%, 49%, 50% or a range defined by any two of these values.

In the cross section of the positive electrode film layer in the thickness direction of the electrode plate, the area proportion of the particles having a particle size of 1 µm to 5 µm being within the above range can increase the compaction density of the electrode plate through grading as well as control the content of the magnetic material in the battery, helping to increase the energy density of the lithium-ion secondary battery and maintain it for a long time during storage.

In some embodiments, in the cross section of the positive electrode film layer in the thickness direction of the electrode plate, the area proportion of the particles having a particle size of 1 µm to 5 µm is 30% to 45%.

In the cross section of the positive electrode film layer in the thickness direction of the electrode plate, the area proportion of the particles having a particle size of 1 µm to 5 µm being within the above range can improve the compaction density and capacity storage stability as well as further ensure a migration distance of lithium ions inside the particles, allowing the lithium-ion secondary battery to maintain a relatively low impedance, thereby improving the kinetic performance of the battery.

In some embodiments, in the cross section of the positive electrode film layer in the thickness direction of the electrode plate, an average equivalent area proportion of particles having a particle size of 1 µm or more is 0.05% to 0.20%.

In some embodiments, in the cross section of the positive electrode film layer in the thickness direction of the electrode plate, the average equivalent area proportion of the particles having a particle size of 1 µm or more is optionally 0.05%, 0.06%, 0.07%, 0.08%, 0.09%, 0.1%, 0.11%, 0.12%, 0.13%, 0.14%, 0.15%, 0.16%, 0.17%, 0.18%, 0.19%, 0.2%, or a range defined by any two of these values.

In the cross section of the positive electrode film layer in the thickness direction of the electrode plate, the average equivalent area proportion of the particles having a particle size of 1 µm or more is obtained by dividing the area proportion of the particles having a particle size of 1 µm or more in the cross section of the positive electrode film layer in the thickness direction of the electrode plate by a total quantity of the particles having a particle size of 1 µm or more in the cross section of the positive electrode film layer in the thickness direction of the electrode plate. In the cross section of the positive electrode film layer in the thickness direction of the electrode plate, the average equivalent area proportion of the particles having a particle size of 1 µm or more is within the above range, meaning that the cross section of the positive electrode film layer in the thickness direction of the electrode plate not only has a certain quantity of large particles to improve the compaction density of the electrode plate, without seriously deteriorating the kinetic performance of the lithium-ion secondary battery due to an excessively large particle size of the large particles, so that both the energy density and the kinetic performance of the battery are ensured.

In some embodiments, in the cross section of the positive electrode film layer in the thickness direction of the electrode plate, an area proportion of particles having a particle size of 50 nm to 200 nm is 3% to 15%, optionally 5% to 12%, further optionally 5% to 10%.

In some embodiments, in the cross section of the positive electrode film layer in the thickness direction of the electrode plate, the area proportion of the particles having a particle size of 50 nm to 200 nm is optionally 3%, 4%, 5%, 6%, 7%, 8%, 9%, 10%, 11%, 12%, 13%, 14%, 15%, or a range defined by any two of these values.

Theoretical research shows that, in an ideal case, spherical particles having a diameter of 314 nm can fill gaps formed by stacking spherical particles having a diameter of 1 nm, thereby implementing particle grading and increasing the powder compaction density. The particles having a particle size of 50 nm to 200 nm can closely fill gaps between particles having a size greater than or equal to 1 µm, and cooperate with these particles to realize compact stacking. The area proportion of the particles having a particle size of 50 nm to 200 nm is within the foregoing range, meaning that there are a certain quantity of particles having a size of 50 nm to 200 nm. This helps to increase a powder compaction density of the positive electrode active material and the compaction density of the electrode plate through grading, thereby further increasing the energy density of the lithium-ion secondary battery.

In some embodiments, the mass content of the magnetic material in the positive electrode film layer is less than or equal to 300 ppm, optionally 20 ppm to 200 ppm.

In some embodiments, the mass content of the magnetic material in the positive electrode film layer is optionally 20 ppm, 50 ppm, 100 ppm, 150 ppm, 200 ppm, 250 ppm, 300 ppm, or a range defined by any two of these values.

The mass content of the magnetic material being within the above range can further alleviate self discharge and improve the capacity storage stability of the battery.

In some embodiments, the magnetic material includes one or more of Fe, Fe₂P, FeP, γ-Fe₂O₃, and Fe₂P₂O₇.

In some embodiments, a mass content of elemental iron in the positive electrode film layer is less than 20 ppm, optionally less than or equal to 15 ppm.

In some embodiments, the mass content of elemental iron in the positive electrode film layer is optionally 0, 5 ppm, 10 ppm, 15 ppm, 19 ppm, or a range defined by any two of these values.

It can be understood that, the mass content of elemental iron in the positive electrode film layer being 0 does not necessarily mean that the positive electrode film layer does not include elemental iron, but only means that the content of elemental iron therein is less than a lower detection limit of elemental iron.

Compared with other magnetic materials, elemental iron is likely to be firstly oxidized at the positive electrode and then reduced at the negative electrode. When elemental iron at the negative electrode accumulates to some extent, dendrites may be formed, which causes puncture of the separator, causes an internal short circuit of the battery, and even causes fire and explosion of the battery, thus posing a huge potential safety hazard. Controlling the mass content of elemental iron within the above range helps to improve the safety of the battery.

In some embodiments, the lithium-containing transition metal phosphate includes a component represented by the following general formula:

LiₘFeₓP_{y}OⱼQ_{q},

where
Q includes one or more of Al, Na, K, Mg, Cu, Mn, Cr, Zn, Pb, Ca, Co, Ni, Sr, Nb, V, Ti, B, S, Si, N, F, Cl, and Br, 0.8 ≤ m ≤ 1.15, 0.9 ≤ x ≤ 1, 0.95 ≤ y ≤ 1, 3.5 ≤ j ≤ 4, and 0 < q ≤ 0.1.

In some embodiments, m is optionally 0.8, 0.85, 0.9, 0.95, 0.98, 1.00, 1.03, 1.05, 1.08, 1.10, 1.13, 1.15, or a range defined by any two of these values; x is optionally 0.9, 0.91, 0.92, 0.93, 0.94, 0.95, 0.96, 0.97, 0.98, 0.99, 1.0, or a range defined by any two of these values; y is optionally 0.95, 0.96, 0.97, 0.98, 0.99, 1.00, or a range defined by any two of these values; j is optionally 3.5, 3.6, 3.7, 3.8, 3.9, 4, or a range defined by any two of these values; and q is optionally 0.01, 0.02, 0.03, 0.04, 0.05, 0.06, 0.07, 0.08, 0.09, 0.1, or a range defined by any two of these values.

Selecting a proper modifying element Q can improve a lattice change rate of the positive electrode active material during lithium intercalation and deintercalation, reduce oxygen activity on the surfaces of the particles, and improve the structural stability of the material, thereby increasing the gram capacity utilization level of the material, and further improving the energy density of the lithium-ion secondary battery.

In some embodiments, the positive electrode active material includes element titanium, and based on a total mass of the positive electrode active material, a mass content of element titanium is 1500 ppm to 8000 ppm, optionally 2500 ppm to 8000 ppm, and further optionally 2500 ppm to 6000 ppm.

In some embodiments, based on the total mass of the positive electrode active material, the mass content of element titanium is optionally 1500 ppm, 2000 ppm, 2500 ppm, 3000 ppm, 3500 ppm, 4000 ppm, 4500 ppm, 5000 ppm, 5500 ppm, 6000 ppm, 6500 ppm, 7000 ppm, 7500 ppm, 8000 ppm, or a range defined by any two of these values.

Types and contents of elements in the positive electrode active material can be tested in any well-known manner in the art. For example, element titanium and the content are tested using inductively coupled plasma emission spectrometry in accordance with Appendix C of GB/T 33822-2017.

A precursor of element titanium, such as titanium dioxide, has surface inertness. The addition of a precursor of element titanium during preparation can reduce the activity of a precursor raw material mixture. This, on one hand, inhibits and stops particle growth, and achieves a purpose of controlling a size of large particles, so that in the cross section of the positive electrode film layer in the thickness direction of the electrode plate, an average equivalent area proportion of particles having a particle size of 1 µm or more is within an appropriate range. On the other hand, a possibility of uneven local chemical reaction of a raw material and generation of a magnetic material is reduced by virtue of the surface inertness of the precursor of element titanium. In addition, doping of element titanium in the positive electrode active material can increase the electronic conductivity and ion transport rate of the lithium-containing transition metal phosphate, and alleviate a negative effect of particles having a relatively large particle size on the kinetic performance of the positive electrode active material. Due to the effect on the particle size of the particles and the lithium ion transport path, both the energy density and the kinetic performance of the battery are ensured.

In some embodiments, based on the total mass of the positive electrode active material, a mass proportion of element carbon is 0.9% to 1.8%.

Based on the total mass of the positive electrode active material, the mass proportion of element carbon may be measured by using methods and devices known in the art. For example, a Dekai HCS infrared carbon and sulfur analyzer is used for measurement in accordance with GB/T 21023-2006 Steel and Iron - Determination of Total Carbon and Sulfur Content - Infrared Absorption Method after Combustion in an Induction Furnace.

In some embodiments, based on the total mass of the positive electrode active material, the mass proportion of element carbon is optionally 0.9%, 1%, 1.1%, 1.2%, 1.3%, 1.4%, 1.5%, 1.6%, 1.7%, 1.8%, or a range defined by any two of these values.

Based on the total mass of the positive electrode active material, the mass proportion of element carbon being within the above range can not only increase the electronic conductivity of the positive electrode active material, but also improve the kinetic performance of the lithium-ion secondary battery. In addition, a negative effect of an excessively high carbon content on a loading capacity of the lithium-containing transition metal phosphate can be reduced, both the compaction density of the electrode plate and the impedance of the lithium-ion secondary battery are ensured, and the energy density and the kinetic performance of the battery are also improved.

In some embodiments, in a cumulative distribution curve of graphitization degree C values of the positive electrode film layer that are obtained in a surface scanning mode of a laser micro-confocal Raman spectrometer, a median C₅₀ of the graphitization degrees is greater than or equal to 0.9 and less than or equal to 1.3, optionally 0.99 to 1.2. The graphitization degree C value is I_{G}/I_{D}. I_{G} represents the intensity of a G peak at 1580±100 cm⁻¹ in a Raman spectrum, and I_{D} represents the intensity of a D peak at 1350±100 cm⁻¹ in the Raman spectrum.

In the present application, the graphitization degree C value of the positive electrode film layer can be obtained in a surface scanning mode of a laser micro-confocal Raman spectrometer. As an example, specifically, a laser micro-confocal Raman spectrometer (a high-precision Renishaw laser micro-confocal Raman spectrometer) is used, and an excitation wave length of 532 nm is selected for scanning a surface of an appropriate amount of positive electrode film layer or scanning a cross section in the thickness direction of the electrode plate, where a region with a size of 45 µm × 45 µm is scanned and is divided into 10 × 10 grids. A grid vertex is used as a test point, a step length is 5 µm, and a total of 100 points are scanned. In this way, a cumulative distribution curve of C values of different sites and a cumulative distribution curve of C values of a surface scanning region are obtained.

The positive electrode film layer in the present application may be a newly prepared positive electrode film layer or a positive electrode film layer obtained by disassembling a battery. Inevitably, there is residual electrolytic salt left on the surface of the positive electrode film layer obtained by disassembling the battery. To improve the test accuracy, preferably, the cross section of the positive electrode film layer in the thickness direction of the electrode plate is subjected to surface scanning, to characterize the graphitization degree of the positive electrode film layer.

The graphitization degree C value of the positive electrode film layer is obtained based on a peak intensity ratio of a G peak (G-band) to a D peak (D-band) of a Raman spectrum. The G peak is at a position of 1580±100 cm⁻¹, which characterizes a carbon sp² hybrid structure. The D peak is at a position of 1350±100 cm⁻¹, which characterizes a disordered structure of carbon. The "disordered" represents that carbon atoms in the structure are not regularly arranged. In the graphite crystal, carbon atoms in a same layer form a covalent bond through sp² hybridization, with a Van der Waals' force between layers, so that carbon of the graphite structure is prone to slippage. Therefore, the value of C may characterize the graphitization degree of the positive electrode film layer. It can be understood that the graphitization degree of the positive electrode film layer is mainly ascribed to a graphitized carbon material in the positive electrode film layer, that is, a carbon coating layer of the positive electrode active material. A carbon nanotube conductive agent rich in an sp² hybrid structure also has relatively high I_{G}/I_{D}, but due to a low addition amount and a small tube diameter of the carbon nanotube conductive agent, the addition of the carbon nanotube conductive agent in the positive electrode film layer shows an extreme value in a Raman surface scanning test of the positive electrode film layer and does not affect the graphitization degree C₅₀ of the positive electrode film layer.

Therefore, the graphitization degree of the positive electrode film layer can also be used to characterize the graphitization degree of the positive electrode active material. A higher graphitization degree of carbon on the surface of the positive electrode active material indicates a higher proportion of carbon of the graphite structure in the positive electrode film layer, and the particles are more likely to slip in a rolling process with the help of the carbon structure having a high graphitization degree in the coating layer, so that the compaction density of the electrode plate can be increased with a low rolling pressure.

A cumulative distribution curve of graphitization degree C values refers to a curve obtained by arranging at least 100 obtained C values in ascending order, with graphitization degree as the horizontal axis and cumulative quantity proportion as the vertical axis. C₅₀ is a C value corresponding to a cumulative quantity proportion of 50% on the vertical axis in a cumulative distribution curve of graphitization degree C values. Compared with a point value, a median C₅₀ of the graphitization degrees can reflect an overall graphitization degree of particles in a positive electrode film layer, that is, the degree of ease of slippage; and compared with an average value, the median can reduce the impact of extreme values during testing, thereby increasing the confidence level of test results.

A person skilled in the art can adjust the graphitization degree of the active material particles by using any known process. As an example, adjusting a carbon source, adjusting a sintering temperature, adjusting a sintering time, adjusting a sintering pressure, and adjusting a sintering atmosphere can all achieve adjustment of the graphitization degree of the active material particles.

In some embodiments, in a cumulative distribution curve of graphitization degree C values obtained from a positive electrode active material in a surface scanning mode of a laser micro-confocal Raman spectrometer, the median C50 of the graphitization degrees is optionally 0.90, 0.91, 0.92, 0.93, 0.94, 0.95, 0.96, 0.97, 0.98, 0.99, 1, 1.01, 1.02, 1.03, 1.04, 1.05, 1.06, 1.07, 1.08, 1.09, 1.1, 1.11, 1.12, 1.13, 1.14, 1.15, 1.16, 1.17, 1.18, 1.19, 1.20, 1.25, 1.3, or a range defined by any two of these values.

The positive electrode active material having a graphitization degree within the above range can easily achieve particle slippage during film formation through rolling of a graphitized carbon layer on the surface of the positive electrode active material, to counteract the negative effect of the particle size on the compaction density of the electrode plate, thereby further increasing the compaction density of the positive electrode film layer through particle slippage.

In some embodiments, in a cumulative sphericity area distribution curve of particles obtained from the cross section of the positive electrode film layer in the thickness direction of the electrode plate, a median L_{A50} of the sphericity is 0.6 to 0.85, optionally 0.65 to 0.80.

In the cross section of the positive electrode film layer in the thickness direction of the electrode plate, a method for testing the sphericity of the particles is as follows: the particles in the cross section of the positive electrode film layer are recognized with reference to the method described above in the present application, and the morphology and area of the particles in the cross section of the positive electrode film layer in the thickness direction of the electrode plate are analyzed using "Shape Descriptors" and "Area" analysis functions in ImageJ. According to the software manual (ImageJ User Guide IJ 1.46r), an "Area" parameter obtained from analysis represents a pixel area of a particle, and a "Round" parameter represents a ratio of the pixel area of the particle to an area of a circle whose fitted major axis is the diameter. When the particle is closer to a spherical shape, the ratio of the pixel area to the area of the circle whose fitted major axis is the diameter is closer to 1. Therefore, the "Round" parameter obtained from analysis is used to characterize the sphericity of the particles. The obtained sphericities of at least 5000 particles are arranged in ascending order, and a cumulative sphericity area distribution curve of the particles in the positive electrode film layer is obtained with the sphericity as the horizontal axis and the cumulative area proportion as the vertical axis. L_{A50} is a sphericity L value corresponding to a cumulative area proportion of 50% on the vertical axis in a cumulative distribution curve of sphericity L values.

A person skilled in the art can adjust the sphericity of the particles by any known process. As an example, the sphericity of the particles may be adjusted by using processes such as grinding, polishing, chemical etching, mechanical stirring, extrusion, coating, granulation, and addition of surfactants, as well as adjusting parameters of each process.

In some embodiments, in the cumulative sphericity area distribution curve of the particles obtained from the cross section of the positive electrode film layer in the thickness direction of the electrode plate, the median L_{A50} of the sphericity is optionally 0.60, 0.61, 0.62, 0.63, 0.64, 0.65, 0.66, 0.67, 0.68, 0.69, 0.70, 0.71, 0.72, 0.73, 0.74, 0.75, 0.76, 0.77, 0.78, 0.79, 0.80, 0.81, 0.82, 0.83, 0.84, 0.85, or a range defined by any two of these values.

Particles of which the median L_{A50} of the sphericity is within the above range are approximately spherical. The particles are prone to slippage under the action of an external force. This can further improve the compaction density of the electrode plate and increase the energy density of the battery.

In some embodiments, a powder compaction density of the positive electrode active material under a pressure of 3T is 2.48 g/cm³ to 2.76 g/cm³.

In the present application, the term "powder compaction density" refers to a density of a compact body having certain density and intensity, which is formed during a compression process under an external force, where as the powder moves and deforms, relatively large gaps are filled, a contact area between particles increases, attractive force is generated between atoms, and mechanical interlocking between particles is enhanced, where the powder compaction density is measured in g/cm³.

The powder compaction density of the positive electrode active material may be measured using methods and devices known in the art. For example, the measurement may be performed using a compaction density instrument with reference to GB/T 24533-2009. Specifically, a certain amount of positive electrode active material is placed on a dedicated compaction mold (with a known mold diameter), where two metal discs are respectively located on the top and bottom of a hollow center of the mold. The positive electrode active material is placed between the metal discs, a metal cylinder is placed on the top, and the mold is placed on the compaction density instrument with a pressure set to 3T. A thickness of the positive electrode active material under a pressure of 3T may be read from the instrument, and the powder compaction density of the positive electrode active material is ρ = m/v, where v = (S × H), m is a mass of the positive electrode active material, S is a bottom area of 1.327 cm² of the mold, and H is a thickness of the compacted positive electrode active material.

In some embodiments, the powder compaction density of the positive electrode active material under the pressure of 3T is optionally 2.48 g/cm³, 2.49 g/cm³, 2.50 g/cm³, 2.51 g/cm³, 2.52 g/cm³, 2.53 g/cm³, 2.54 g/cm³, 2.55 g/cm³, 2.56 g/cm³, 2.57 g/cm³, 2.58 g/cm³, 2.59 g/cm³, 2.60 g/cm³, 2.61 g/cm³, 2.62 g/cm³, 2.63 g/cm³, 2.64 g/cm³, 2.65 g/cm³, 2.66 g/cm³, 2.67 g/cm3, 2.68 g/cm³, 2.69 g/cm³, 2.70 g/cm³, 2.71 g/cm³, 2.72 g/cm³, 2.73 g/cm³, 2.74 g/cm³, 2.75 g/cm³, 2.76 g/cm³, or a range defined by any two of these values.

The positive electrode active material has a high powder compaction density, providing a material basis for increasing the compaction density of the electrode plate and producing a high-energy-density lithium-ion secondary battery.

In some embodiments, the powder compaction density of the positive electrode active material under the pressure of 3T is 2.58 g/cm³ to 2.76 /cm³.

The positive electrode active material having a compaction density within the above range can further improve the compaction density of the electrode plate, and increase the energy density of the battery.

In some embodiments, a powder resistivity of the positive electrode active material under a pressure of 8 MPa is 2.0 Ω·cm to 40 Ω·cm.

The powder resistivity of the positive electrode active material may be measured same methods and devices known in the art. For example, the measurement may be performed using a powder resistivity meter (Suzhou Lattice Electronics, Model ST2722) with reference to GB/T 33822-2017. Specifically, a certain amount (for example, 1 g) of positive electrode active material is weighed and added to a loading chamber of the powder resistivity meter, a pressure of 8 MPa is applied, a forward resistivity and a reverse resistivity of the positive electrode active material are tested separately, and an average of the forward resistivity and the reverse resistivity is taken as the powder resistivity of the positive electrode active material.

In some embodiments, the powder resistivity of the positive electrode active material under the pressure of 8 MPa is optionally 2 Ω·cm, 3 Ω·cm, 4 Ω·cm, 5 Ω·cm, 6 Ω·cm, 7 Ω·cm, 8 Ω·cm, 9 Ω·cm, 10 Ω·cm, 11 Ω·cm, 12 Ω·cm, 13 Ω·cm, 14 Ω·cm, 15 Ω·cm, 16 Ω·cm, 17 Ω·cm, 18 Ω·cm, 19 Ω·cm, 20 Ω·cm, 21 Ω·cm, 22 Ω·cm, 23 Ω·cm, 24 Ω·cm, 25 Ω·cm, 26 Ω·cm, 27 Ω·cm, 28 Ω·cm, 29 Ω·cm, 30 Ω·cm, 31 Ω·cm, 32 Ω·cm, 33 Ω·cm, 34 Ω·cm, 35 Ω·cm, 36 Ω·cm, 37 Ω·cm, 38 Ω·cm, 39 Ω·cm, 40 Ω·cm, or a range defined by any two of these values.

The positive electrode active material has a low powder resistivity, helping to increase the capacity utilization level of the positive electrode active material and increase the energy density of the lithium-ion secondary battery.

In some embodiments, the discharge gram capacity of the positive electrode active material at room temperature at a discharge rate of 1 C is 135 mAh/g to 150 mAh/g.

In the present application, the positive electrode active material is assembled into a button battery, which is placed on a Land tester for testing the electrical performance. At 25±5°C and within a voltage range of 2.0 V to 3.75 V, the button battery is charged at a constant current of 1 C to 3.75 V, paused for 5 minutes, charged at a constant voltage to a cutoff current of 50 µA, and then discharged at a constant current of 1 C to 2.0 V. A discharge capacity of the button battery is divided by a mass of the positive electrode active material to obtain the discharge gram capacity of the positive electrode active material at room temperature at the discharge rate of 1 C.

The preparation and testing process of the button battery is as follows: 2.0 g of a positive electrode active material, conductive carbon black, and PVDF are mixed at a mass ratio of 0.9:0.05:0.05, then an organic solvent NMP (N-methylpyrrolidone) is added, and after thorough mixing, the mixture is used for coating using a 150 µm scraper and dried at 100°C for 2 h, and the positive electrode plate is compacted to a compaction density of 2.0 g/cm³ to 2.2 g/cm³. The positive electrode plate is punched into a disc with a size of 14 mm, and weighed, and the weight is recorded. The weighed positive electrode plate is placed in a vacuum drying oven (at 105°C, for 1-12 hrs, at -90 kpa). After drying, the positive electrode plate is placed in a glove box, and a battery is formed by assembling a negative electrode case, a nickel mesh, a lithium sheet, a separator, a positive electrode plate, and a positive electrode case in sequence. 65-87 µL of electrolyte solution (the electrolyte solution is a solvent mixture of EC (ethylene carbonate) and DMC (1,2-dimethyl carbonate) at a volume ratio of 1:1, with LiPF₆ as an electrolyte) is dropwise added (through a pipette), and the negative electrode is placed on top. The battery is placed in a groove of a sealing machine with a sealing pressure of 650 kg/cm², and the button battery is removed with insulated tweezers and placed in a dust-free bag, the glovebox is removed, and then the battery is left standing in a constant-temperature room for 3 h to obtain a button battery for testing.

It can be understood that the discharge gram capacity of the positive electrode active material may also be obtained through a test in which a battery is disassembled to obtain a positive electrode plate which is assembled into a button battery according to the method described above.

In some embodiments, the discharge gram capacity of the positive electrode active material at room temperature at the discharge rate of 1 C is optionally 135 mAh/g, 140 mAh/g, 141 mAh/g, 142 mAh/g, 143 mAh/g, 144 mAh/g, 145 mAh/g, 146 mAh/g, 147 mAh/g, 148 mAh/g, 149 mAh/g, 150 mAh/g, or a range defined by any two of these values.

The positive electrode active material has a high discharge gram capacity, indicating that the positive electrode active material has good kinetic performance and helps to increase the energy density of the lithium-ion secondary battery.

In some embodiments, a discharge capacity proportion η of the positive electrode active material discharged to 3.2 V is greater than or equal to 85%. η is defined as follows. At room temperature, a button battery including the positive electrode active material is charged and discharged twice at a constant current at a rate of 0.1 C within a voltage range of 2.0 V to 3.75 V, and then charged and discharged once at a constant current at a rate of 1 C. During the charge-discharge test at the rate of 1 C, a capacity value at the discharge voltage of 3.2 V is extracted and recorded as C1, a capacity value at the discharge voltage of 2.0 V is extracted and recorded as C2, and η=C1/C2. A charging process includes constant-voltage charging with a constant voltage of 3.75 V and a constant-voltage cutoff current of 50 µA.

A value of η of the positive electrode active material may be measured using methods and devices known in the art. As an example, a button battery is first prepared with reference to the method described above, and electrical performance of the prepared button battery is tested on a Land tester. Specifically, at room temperature, the button battery is charged and discharged twice at a constant current at a rate of 0.1 C within a voltage range of 2.0 V to 3.75 V, charged at a constant current to a cutoff voltage, then charged at a constant voltage to a current of 50 µA, and subsequently charged and discharged once at a constant current at a rate of 1 C. In a charge-discharge test at a rate of 1 C, a capacity value of the battery discharged from 3.75 V to a voltage of 3.2 V is recorded as C1, a capacity value of the battery discharged from 3.75 V to 2.0 V is recorded as C2, and η = C1/C2.

In some embodiments, η is optionally 85%, 86%, 87%, 88%, 88.1%, 89%, 90%, 90.1%, 91%, 92%, 92.2%, 93%, 94%, 94.1%, 94.5%, 95%, 95.1%, or a range defined by any two of these values.

In some embodiments, a discharge capacity proportion η of a positive electrode active material in a newly prepared lithium-ion secondary battery discharged to 3.2 V is greater than or equal to 88%. After the newly prepared lithium-ion secondary battery is charged and discharged at a constant current at a rate of 0.1 C within a voltage range of 2.0 V to 3.75 V for a period of time, the discharge capacity proportion η of the positive electrode active material discharged to 3.2 V may be kept greater than or equal to 85%.

In the battery of these examples of the present application, a high discharge capacity proportion of the positive electrode active material discharged to 3.2V indicates that although the positive electrode active material contains a certain proportion of large-size particles, it still maintains good kinetic performance. In addition, the large value of η indicates that the lithium-ion secondary battery containing the positive electrode active material still has a high voltage when discharged to a low state of charge (SOC), which helps to maintain good power performance.

In some embodiments, the positive electrode film layer further includes a binder and a conductive agent. Based on a total mass of the positive electrode film layer, a mass content of the positive electrode active material is 94% to 99.4%, a mass content of the binder is 0.5% to 3%, and a mass content of the conductive agent is 0.1% to 3%.

In some embodying parties, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the conductive agent includes at least one of superconducting carbon, acetylene black, carbon black, Ketjen black, carbon dots, carbon nanotubes, graphene, and carbon nanofiber.

In some embodiments, based on the total mass of the positive electrode film layer, a mass content of the positive electrode active material is optionally 94%, 95%, 96%, 97%, 98%, 99%, 99.4%, or a range defined by any two of these values.

In some embodiments, based on the total mass of the positive electrode film layer, a mass content of the binder is optionally 0.5%, 1%, 1.5%, 2%, 2.5%, 3%, or a range defined by any two of these values.

In some embodiments, based on the total mass of the positive electrode film layer, a mass content of the conductive agent is optionally 0.1%, 0.2%, 0.3%, 0.4%, 0.5%, 1%, 1.5%, 2%, 2.5%, 3%, or a range defined by any two of these values.

In some embodiments, an areal density of the positive electrode film layer on each side is 300 mg/1540 mm² to 450 mg/1540 mm².

In the present application, the areal density of the positive electrode film layer on each side has a meaning well known in the art and may be tested using methods known in the art. For example, a compacted positive electrode plate with one side coated (if it is a positive electrode plate with both sides coated, a positive electrode film layer on one side may be wiped off first) is punched into a small disc with an area of S₁, the small disc is weighed, and the weight is recorded as M₁. Then, a positive electrode film layer of the weighed positive electrode plate is wiped off, and a weight of a current collector is weighed and recorded as M₀. Areal density of positive electrode film layer on each side = (M₁ - M₀)/S₁. To ensure the accuracy of test results, a plurality of groups (for example, 10 groups) of samples to be tested may be measured, and an average value is calculated as the test result.

In some embodiments, the areal density of the positive electrode film layer on each side is optionally 300 mg/1540 mm², 310 mg/1540 mm², 320 mg/1540 mm², 330 mg/1540 mm², 340 mg/1540 mm², 350 mg/1540 mm², 360 mg/1540 mm², 370 mg/1540 mm², 380 mg/1540 mm², 390 mg/1540 mm², 400 mg/1540 mm², 410 mg/1540 mm², 420 mg/1540 mm², 430 mg/1540 mm², 440 mg/1540 mm², 450 mg/1540 mm², or a range defined by any two of these values.

The positive electrode film layer having an areal density within the above range can help to increase the energy density of the lithium-ion secondary battery.

In some embodiments, when the lithium-ion secondary battery is in a fully discharged state, the compaction density of the positive electrode film layer is 2.43 g/cm³ to 2.78 g/cm³.

In the present application, the fully discharged state refers to a state obtained after a battery is placed in an oven environment at 25°C and left standing for 2 h until the battery temperature is kept at 25°C, and the battery is discharged at a constant current of 1/3 C to 2.5 V and then discharged at a constant current of 0.1 C to 2.0 V.

The compaction density of the positive electrode film layer may be tested using methods known in the art. As an example, a battery is placed in an oven environment at 25°C, and left standing for 2 h until the battery temperature is kept at 25°C. The battery is discharged at a constant current of 1/3 C to 2.5 V, and then discharged at a constant current of 0.1 C to 2.0 V. The battery is disassembled to obtain a positive electrode plate in a fully discharged state of the lithium-ion secondary battery. A residual electrolyte solution is treated with a dimethyl carbonate solvent. The electrode plate is dried and cut into a small disc with an area of S. A weight was recorded as W1 after weighing. A thickness T1 of the positive electrode plate is measured using a micrometer. Then, a positive electrode film layer of the weighed electrode plate is wiped off. A weight of a current collector is weighed and recorded as W2. A thickness T2 of the current collector is measured using the micrometer. The compaction density PD of the positive electrode film layer is equal to (W1 - W2)/[(T1 - T2) × S].

In some embodiments, when a lithium-ion secondary battery is in a fully discharged state, the compaction density of the positive electrode film layer is optionally 2.43 g/cm³, 2.44 g/cm³, 2.45 g/cm³, 2.46 g/cm³, 2.47 g/cm³, 2.48 g/cm³, 2.49 g/cm³, 2.50 g/cm³, 2.51 g/cm³, 2.52 g/cm³, 2.53 g/cm³, 2.54 g/cm³, 2.55 g/cm³, 2.56 g/cm³, 2.57 g/cm³, 2.58 g/cm³, 2.59 g/cm³, 2.60 g/cm³, 2.61 g/cm³, 2.62 g/cm³, 2.63 g/cm³, 2.64 g/cm³, 2.65 g/cm³, 2.66 g/cm³, 2.67 g/cm³, 2.68 g/cm³, 2.69 g/cm³, 2.70 g/cm³, 2.71 g/cm³, 2.72 g/cm³, 2.73 g/cm³, 2.74 g/cm³, 2.75 g/cm³, 2.76 g/cm³, 2.77 g/cm³, 2.78 g/cm³, or a range defined by any two of these values.

The compaction density of the positive electrode film layer being within the above range helps to increase the energy density of the lithium-ion secondary battery.

In some embodiments, when the lithium-ion secondary battery is in the fully discharged state, the compaction density of the positive electrode film layer is 2.50 g/cm³ to 2.75 g/cm³.

In some embodiments, after a compaction process, the compaction density of the positive electrode film layer is 2.55 g/cm³ to 2.90 g/cm³.

In some embodiments, after the compaction process, the compaction density of the positive electrode film layer is optionally 2.55 g/cm³, 2.63 g/cm³, 2.64 g/cm³, 2.65 g/cm³, 2.66 g/cm³, 2.67 g/cm³, 2.68 g/cm³, 2.69g/cm³, 2.70 g/cm³, 2.71 g/cm³, 2.72 g/cm³, 2.73 g/cm³, 2.74 g/cm³, 2.75 g/cm³, 2.76 g/cm³, 2.77 g/cm³, 2.78 g/cm³ g/cm³, 2.79 g/cm³, 2.80 g/cm³, 2.81 g/cm³, 2.82 g/cm³, 2.83 g/cm³, 2.84 g/cm³, 2.85 g/cm³, 2.90 g/cm³, or a range defined by any two of these values.

In the present application, "compaction" refers to a process in which the positive electrode film layer is compacted through a mechanical pressure to improve the compactness and conductivity thereof during battery assembly.

In some embodiments, after a formation process, the compaction density of the positive electrode film layer is 2.43 g/cm³ to 2.78 g/cm³.

In some embodiments, after the formation process, the compaction density of the positive electrode film layer is optionally 2.43 g/cm³, 2.52 g/cm³, 2.53 g/cm³, 2.54 g/cm³, 2.55 g/cm³, 2.56 g/cm³, 2.57 g/cm³, 2.58 g/cm³, 2.59 g/cm³, 2.60 g/cm³, 2.61 g/cm³, 2.62 g/cm³, 2.63 g/cm³, 2.64 g/cm³, 2.65 g/cm³, 2.66 g/cm³, 2.67 g/cm³, 2.68 g/cm³, 2.69 g/cm³, 2.70 g/cm³, 2.71 g/cm³, 2.72 g/cm³, 2.73 g/cm³, 2.78 g/cm³, or a range defined by any two of these values.

In the present application, formation refers to a process in which a stable solid electrolyte interface (SEI film) and electrode structure are formed through electrochemical reactions during a first charge-discharge process of a battery.

It can be understood that, with rebound of the electrode plate during cycling, the compaction density of the positive electrode film layer in the fully discharged state of the lithium-ion secondary battery is slightly lower than the compaction density of the positive electrode film layer after compaction and formation.

In some embodiments, when the lithium-ion secondary battery is in the fully discharged state, the compaction density of the positive electrode film layer is 2.43 g/cm³ to 2.78 g/cm³, and in the cross section of the positive electrode film layer in the thickness direction of the electrode plate, a porosity of the positive electrode film layer is 10% to 28%.

In some embodiments, when the lithium-ion secondary battery is in the fully discharged state, the compaction density of the positive electrode film layer is 2.5 g/cm³ to 2.78 g/cm³, and in the cross section of the positive electrode film layer in the thickness direction of the electrode plate, the porosity of the positive electrode film layer is 10% to 22%.

In some embodiments, in the cross section of the positive electrode film layer in the thickness direction of the electrode plate, the porosity of the positive electrode film layer is optionally 10%, 11%, 12%, 13%, 14%, 15%, 16%, 17%, 18%, 19%, 20%, 21%, 22%, 23%, 24%, 25%, 26%, 27%, 28%, or a range defined by any two of these values.

The porosity of the positive electrode film layer in the cross section of the positive electrode film layer in the thickness direction of the electrode plate may be tested as follows. A scanning electron microscope image of the cross section of the positive electrode film layer in the thickness direction of the electrode plate, obtained in a manner as described above, is imported into ImageJ software. A line tool is selected to mark a scale length in the image with a straight line, and "Analyze Set Scale" is clicked to set scale parameters in the software based on the scale length in the image. A rectangular tool is selected to choose a portion of the image out the scale region, "Image Duplicate" is used to duplicate the selected region, and "Image Type 8 bit" is used to adjust the image format. "Analyze Set Measurements" is selected, and the following five options are selected: "Area", "Mean gray value", "Area Fraction", "Limit to threshold", and "Feret's diameter", where "Decimal places" is set to 3. Then, "Image", "Adjust", and "Threshold" are selected in sequence, and values are set to 0 and 100 in the "Threshold" selection box, and the data of pores in the electron microscope image of the cross section can be exported using the Analyze-Measure function. "Image", "Overlay", and "Flatten" are used to export a pore image. "Apply" in "Threshold" is clicked, followed by "Analyze" and "Analyze Particles", and the four columns on the left are checked to obtain statistical data of the pores.

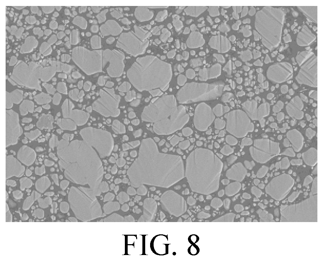

It can be understood that in these examples of the present application, "pores" in the cross section of the positive electrode film layer are recognized through image color differences and thresholds. As shown in FIG. 8, the "pores" are not porosity data obtained from an exhaust test and are mainly used to characterize a cross-sectional area of the particles in the cross section of the positive electrode film layer. This method is superior to the exhaust method because the porosity obtained by the exhaust method is related to pores between particles and also related to pores in a carbon coating layer on the surface of lithium iron phosphate particles, making it impossible to objectively reflect the pores between the particles. On one hand, a lower porosity in the cross section of the positive electrode film layer that is tested using this method indicates better grading of large, medium and small particles in the positive electrode film layer and higher compaction density. On the other hand, after the same grading and rolling pressure, a low porosity means that the particles are more likely to slip to each other, reducing the risk of overpressure and stress concentration in the film layer, and further reducing the possibility of demolding of a positive electrode film during a long cycling process, thereby helping to improve the long cycling performance of the battery.

In some embodiments, the positive electrode plate includes a base coating, and the base coating is disposed between the positive electrode film layer and the current collector. The base coating includes carbon-based particles, and a distribution density of carbon-based particles having a particle size greater than 100 nm in the base coating is less than or equal to 10 pcs/10 µm.

The carbon-based particles refer to particles with carbon as the main component, including but not limited to conductive carbon and carbon black.

The base coating helps to enhance the conductivity and adhesion force between the positive electrode film layer and the current collector, reducing the demolding of the positive electrode film layer from the current collector during the cycling process, and meanwhile, improving the kinetic performance of the battery. In the high-compaction-density electrode plate of these examples of the present application, for example, when the compaction density of the positive electrode plate in a fully discharged state is greater than or equal to 2.4 g/cm³, the current collector is prone to damage during a high-pressure compaction process of the electrode plate, and large-size particles are likely to form recesses on the current collector. Controlling the distribution density of the carbon-based particles having a particle size greater than 100 nm in the base coating to be less than or equal to 10 pcs/10 µm helps to reduce the possibility of damage to the current collector in the high-compaction-density electrode plate and further improve the maximum compaction density of the positive electrode plate.

In some embodiments, the positive electrode plate includes a base coating, and the base coating is disposed between the positive electrode film layer and the current collector. The base coating includes carbon-based particles, and a distribution density of carbon-based particles having a particle size greater than 100 nm in the base coating may be 0.1 pcs/10 µm, 1 pcs/10 µm, 1.5 pcs/10 µm, 2 pcs/10 µm, 2.5 pcs/10 µm, 3 pcs/10 µm, 3.5 pcs/10 µm, 4 pcs/10 µm, 4.5 pcs/10 µm, 5 pcs/10 µm, 5.5 pcs/10 µm, 6 pcs/10 µm, 6.5 pcs/10 µm, 7 pcs/10 µm, 7.5 pcs/10 µm, 8 pcs/10 µm, 8.5 pcs/10 µm, 9 pcs/10 µm, 9.5 pcs/10 µm, 10 pcs/10 µm, or a range defined by any two of these values.

The distribution density of the carbon-based particles having a particle size greater than 100 nm in the base coating may be measured using the method described above. The positive electrode film layer is cut in the thickness direction of the electrode plate using an argon ion beam, and a scanning electron microscope image or a microscope image is taken. A size of carbon particles in the base coating is detected through statistical methods, and a quantity of carbon-based particles having a particle size greater than 100 nm per 10 µm in the base coating is counted, which is repeated at least five times to calculate an average value.

The base coating in these examples of the present application may be achieved through any well-known preparation process, for example, an operation such as pre-screening or centrifugation is performed during a preparation process of carbon-based particles to remove a large-particle carbon-based material, so that the D_{V}50 of carbon-based particles added during the preparation process of the base coating is 20 nm to 60 nm and the D_{V}90 is less than or equal to 70 nm. The carbon-based material and the binder are mixed, stirred, and coated onto the current collector to obtain a base coating.

In some embodiments, the positive electrode plate includes a base coating, and the base coating is disposed between the positive electrode film layer and the current collector. The compaction density of the positive electrode plate in the fully discharged state is greater than or equal to 2.4 g/cm³, and the thickness of the base coating on each side is 1 µm to 4 µm.

In some embodiments, the positive electrode plate includes a base coating, and the base coating is disposed between the positive electrode film layer and the current collector. The compaction density of the positive electrode plate in the fully discharged state is greater than or equal to 2.5 g/cm³, and the thickness of the base coating on each side is 2 µm to 4 µm.

As the compaction density of the electrode plate increases, a large-particle lithium-containing phosphate material (for example, having a particle size greater than 1 µm) in the positive electrode film layer compresses the base coating more significantly. Therefore, stress concentration easily occurs at large particle sites, and the current collector is even damaged by large particles passing through the base coating. Increasing the thickness of the base coating helps to alleviate the stress concentration in the electrode plate, and further increases the maximum compaction density of the electrode plate.

In some embodiments, the thickness of the base coating on each side may be 2 µm, 2.5 µm, 3 µm, 3.5 µm, 4 µm, or a range defined by any two of these values.

The thickness of the base coating on each side may be tested as follows. According to the method described above, the positive electrode film layer is cut in the thickness direction of the electrode plate using an argon ion beam, and a scanning electron microscope image is taken. Along the length direction of the electrode plate, points are taken every 1 µm to measure a thickness of the base coating on each side, and an average value is calculated after the thicknesses of the base coating at 10 points are measured. It should be noted that during a measurement point selection process, abnormal points should be avoided, that is, regions of the base coating having a thickness less than 50 nm or greater than 4 µm. These abnormal points are mainly due to extreme thickness fluctuations in certain regions caused by extrusion due to abnormal stress concentration during a compaction process of the electrode plate, and therefore have no statistical significance. In some embodiments, a thickness of the positive electrode current collector is less than or equal to 17 µm, optionally 13 µm to 15 µm.

In some embodiments, the thickness of the positive electrode current collector is 13 µm, 14 µm, 15 µm, 16 µm, 17 µm, or a range defined by any two of these values.

In some embodiments, the positive electrode current collector may be a metal foil or a composite current collector. For example, an aluminum foil may be used as the metal foil. The composite current collector may include a polymer material substrate layer and a metal layer formed on at least one surface of the polymer material substrate layer. The composite current collector may be formed by forming a metal material (for example, aluminum, aluminum alloy, nickel, nickel alloy, titanium, titanium alloy, silver, or silver alloy) on a polymer material substrate (for example, a substrate of polypropylene (PP), polyethylene terephthalate (PET), polybutylene terephthalate (PBT), polystyrene (PS), or polyethylene (PE)).

The positive electrode current collector having a thickness within the above range helps to increase a load per unit mass of a battery, thereby increasing the energy density of the lithium-ion secondary battery.

In some embodiments, the negative electrode plate includes a negative electrode current collector and a negative electrode film layer disposed on at least one side of the negative electrode current collector. An areal density of the negative electrode film layer on each side is 130 mg/1540 mm² to 220 mg/1540 mm²; and/or a compaction density of the negative electrode film layer is 1.40 g/cm³ to 1.75 g/cm³.

In some embodiments, the areal density of the negative electrode film layer on each side is optionally 130 mg/1540 mm², 140 mg/1540 mm², 150 mg/1540 mm², 160 mg/1540 mm², 170 mg/1540 mm², 180 mg/1540 mm², 190 mg/1540 mm², 200 mg/1540 mm², 210 mg/1540 mm², 220 mg/1540 mm², or a range defined by any two of these values.

In some embodiments, the compaction density of the negative electrode film layer is 1.40 g/cm³ to 1.75 g/cm³.

In some embodiments, the compaction density of the negative electrode film layer is optionally 1.40 g/cm³, 1.45 g/cm³, 1.50 g/cm³, 1.55 g/cm³, 1.60 g/cm³, 1.70 g/cm³, 1.75 g/cm³, or a range defined by any two of these values.

The areal density and compaction density of the negative electrode film layer on each side may be tested using methods similar to those described above for the positive electrode film layer.

The areal density and compaction density of the negative electrode film layer being within the above ranges helps the negative electrode film layer to match with a positive electrode film layer, increasing the energy density of the lithium-ion secondary battery.

In some embodiments, the negative electrode current collector may be a metal foil or a composite current collector. For example, a copper foil may be used as the metal foil. The composite current collector may include a polymer material substrate layer and a metal layer formed on at least one surface of the polymer material substrate. The composite current collector may be formed by forming a metal material (for example, copper, copper alloy, nickel, nickel alloy, titanium, titanium alloy, silver, or silver alloy) on the polymer material substrate (for example, a substrate of polypropylene (PP), polyethylene terephthalate (PET), polybutylene terephthalate (PBT), polystyrene (PS), or polyethylene (PE)).

In some embodiments, the negative electrode film layer includes a negative electrode active material. The negative electrode active material may be a negative electrode active material used for a battery and well known in the art. As an example, the negative electrode active material may include at least one of the following materials: artificial graphite, natural graphite, soft carbon, hard carbon, a silicon-based material, a tin-based material, lithium titanate, and the like. The silicon-based material may be at least one selected from elemental silicon, a silicon oxide, a silicon-carbon compound, a silicon-nitrogen compound, and silicon alloy. The tin-based material may be at least one selected from elemental tin, a tin oxide, and tin alloy. However, the present application is not limited to these materials, and other conventional materials that can be used as the negative electrode active material for a battery may alternatively be used. One type of these negative electrode active materials may be used individually, or two or more types of these negative electrode active materials may be used in combination.

In some embodiments, the negative electrode film layer optionally further includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), poly(methyl methacrylate) (PMAA), and carboxymethyl chitosan (CMCS).

In some embodiments, the negative electrode film layer optionally further includes a conductive agent. The conductive agent may be at least one selected from superconducting carbon, acetylene black, carbon black, Ketjen black, carbon dots, carbon nanotubes, graphene, and carbon nanofiber.

In some embodiments, the negative electrode film layer optionally further includes another additive such as a thickener (for example, sodium carboxymethyl cellulose (CMC-Na)).

In some embodiments, the negative electrode plate may be prepared in the following manner. The above components for preparing the negative electrode plate, such as the negative electrode active material, the conductive agent, the binder, and any other component, are dispersed in a solvent (for example, deionized water) to form a negative electrode slurry. The negative electrode slurry is coated onto the negative electrode current collector, followed by processes such as drying and compaction, to obtain a negative electrode plate.

The electrolyte is provided between the positive electrode plate and the negative electrode plate for ion conduction. The type of the electrolyte is not specifically limited in the present application, and may be selected according to requirements. For example, the electrolyte may be in a liquid state, a gel state, or an all-solid state.

In some embodiments, the electrolyte is an electrolyte solution. The electrolyte solution includes an electrolytic salt and a solvent.

In some embodiments, the electrolytic salt may be at least one selected from lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution optionally further includes an additive. For example, the additive may include a negative electrode film-forming additive or a positive electrode film-forming additive, and may further include an additive capable of improving some performance of the battery, for example, an additive for improving overcharge performance of the battery, or an additive for improving high-temperature or low-temperature performance of the battery.

In some embodiments, the lithium-ion secondary battery further includes a separator. The type of the separator is not particularly limited in the present application, and any well-known separator which is of a porous structure and has good chemical stability and mechanical stability may be used.

In some embodiments, the material of the separator may be at least one selected from glass fiber, non-woven cloth, polyethylene, polypropylene, and polyvinylidene fluoride. The separator may be a single-layer film or a multilayer composite film. This is not particularly limited. When the separator is a multilayer composite film, the materials of all layers may be the same or different. This is not particularly limited.

In some embodiments, a positive electrode plate, a negative electrode plate, and a separator may be made into an electrode assembly using a winding process or a lamination process.

In some embodiments, the lithium-ion secondary battery may include an outer package. The outer package may be used for packaging the above electrode assembly and electrolyte.

In some embodiments, the outer package of the lithium-ion secondary battery may be a hard shell, for example, a hard plastic shell, an aluminum shell, or a steel shell. The outer package of the secondary battery may alternatively be a soft package, for example, a pouch-type soft package. The material of the soft package may be plastic, and examples of the plastic may include polypropylene, polybutylene terephthalate, polybutylene succinate, and the like.

A second aspect of the present application provides a battery apparatus, including the lithium-ion secondary battery provided by the first aspect of the present application. The battery apparatus includes at least one of a battery module, a battery pack, and an energy storage battery.

A third aspect of the present application provides a power consuming apparatus, including the lithium-ion secondary battery provided by the first aspect of the present application. A fourth aspect of the present application provides a method for preparing a positive electrode active material, including: obtaining a raw material mixture including a carbon source, a lithium source, an iron source, and a phosphorus source, where a molar ratio of lithium to iron in the raw material mixture is greater than 1 and less than 1.05; grinding the raw material mixture to obtain a slurry mixture, where a solid-phase volume distribution particle size D_{V50} of the slurry mixture is 0.3 µm to 0.4 µm; drying the slurry mixture to obtain precursor powder; and sintering the precursor powder to obtain a positive electrode active material. The sintering is performed in an inert gas atmosphere, with a total gas flow rate of 1100 m³/h to 1400 m³/h during the sintering process. The sintering includes a temperature-rise stage and a constant-temperature stage. An inert gas inflow rate v1 during the temperature-rise stage is higher than an inert gas inflow rate v2 during the constant-temperature stage. A temperature in the constant-temperature stage during the sintering is from 770°C to 830°C. The positive electrode active material includes lithium-containing transition metal phosphate particles whose surfaces are at least partially provided with a carbon coating material.

In some embodiments, a temperature in the constant-temperature stage of the sintering is optionally 770°C, 780°C, 790°C, 800°C, 810°C, 820°C, 830°C, or a range defined by any two of these values.

High-temperature sintering helps to increase the area proportion of the particles having a particle size greater than or equal to 1 µm in the positive electrode film layer.

In some embodiments, the molar ratio of lithium to iron in the raw material mixture is optionally 1.01, 1.02, 1.03, 1.04, or a range defined by any two of these values.

In the raw material mixture, a molar ratio of lithium to iron being greater than 1 helps to supplement lithium during the sintering process of the positive electrode active material, enhancing crystal crystallinity and increasing the capacity of the positive electrode active material. However, research shows that an excessively high molar ratio of lithium to iron in the raw material may lead to incomplete chemical reactions in local regions during the sintering process of the positive electrode active material, thereby increasing the possibility of generation of magnetic materials such as Fe₂P. The molar ratio of lithium to iron in the raw material mixture being within the above range helps to increase the compaction density of the electrode plate and improve the energy density of the lithium-ion secondary battery as well as allow the battery to have a low self-discharge level, thereby maintaining the energy density of the lithium-ion secondary battery for a long time during storage and cycling of the battery.

In the present application, the term "D_{V50}" refers to a particle size where a cumulative volumetric particle size distribution percentage of a sample obtained by a Malvern laser scattering test is 50%.

In some embodiments, a solid-phase volume distribution particle size D_{V50} in the slurry mixture is optionally 0.3 µm, 0.31 µm, 0.32 µm, 0.33 µm, 0.34 µm, 0.35 µm, 0.36 µm, 0.37 µm, 0.38 µm, 0.39 µm, 0.4 µm, or a range defined by any two of these values.

The solid-phase particle size in the ground slurry mixture being within the above range indicates that the raw material has a small particle size, so that the raw material has relatively high activity, facilitating solid-phase diffusion during high-temperature sintering and formation of particles having a particle size of 1 µm or more and accounting for a certain area proportion. In addition, the solid-phase particle size in the ground slurry mixture being within the above range helps to reduce the possibility of generation of a magnetic material caused by uneven chemical reactions in local regions due to excessively high activity of the raw material.

In some embodiments, the inert gas includes one or more of nitrogen, neon, and helium.

In some embodiments, the sintering is performed in an inert gas atmosphere, and a total gas flow rate during the sintering process is optionally 1100 m³/h, 1200 m³/h, 1300 m³/h, 1350 m³/h, 1400 m³/h, or a range defined by any two of these values.

The total gas flow rate during the sintering process being within the above range helps to reduce a partial pressure of a reducing atmosphere, thereby reducing the possibility of local reduction and an increase in magnetic materials.

During the temperature-rise process, an intense chemical reaction takes place between precursor raw materials, and increasing the gas flow rate helps to reduce the occurrence of the excessively high local reducing atmosphere, uneven reaction, and high content of magnetic materials. During the constant-temperature process, slow solid-phase diffusion occurs between the precursor raw materials, which enables particle growth, and maintaining a relatively low gas flow rate helps to ensure the stability of a temperature field during the sintering process, thereby achieving uniform particle growth.

In some embodiments, v1:v2 is optionally 1.1:1, 1.2:1, 1.3:1, 1.4:1, 1.5:1, 1.6:1, 1.7:1, 1.8:1, 1.9:1, 2:1, or a range defined by any two of these values.

According to the positive electrode active material prepared by using the method, the cross section of the positive electrode film layer in the thickness direction of the electrode plate has particles having a size of 1 µm or more and accounting for a certain area proportion, and the positive electrode active material contains a small amount of magnetic material, increasing the compaction density of the electrode plate and improving the energy density of the lithium-ion secondary battery as well as allowing the battery to have a low self-discharge level, so that the energy density of the lithium-ion secondary battery is maintained for a long time during storage and cycling of the battery.

In some embodiments, the iron source is an iron-containing compound.

In some embodiments, the iron source includes at least one of iron hydroxide, ferrous chloride, ferric oxide, iron phosphate, iron pyrophosphate, ferrous oxalate, iron powder, iron nitrate, ferrosoferric oxide, and iron oxyhydroxide.

In some embodiments, the phosphorus source is a phosphate compound.

In some embodiments, the phosphorus source includes at least one of phosphoric acid, iron phosphate, ammonium dihydrogen phosphate, and diammonium hydrogen phosphate.

In some embodiments, the iron source and the phosphorus source may be the same material. In some embodiments, iron phosphate is used as both the iron source and the phosphorus source.

In some embodiments, the lithium source includes one or more of lithium carbonate, lithium dihydrogen phosphate, lithium oxalate, lithium oxide, lithium hydroxide, and lithium acetate.

In some embodiments, the lithium source includes lithium carbonate.

In some embodiments, the carbon source includes one or more of glucose, polyethylene glycol, citric acid, sucrose, starch, fructose, lactose, polyaniline, polyacrylonitrile, and polyvinylpyrrolidone.

In some embodiments, the carbon source includes glucose and polyethylene glycol.

In some embodiments, the slurry mixture further includes a titanium source, and optionally, the titanium source includes one or more of titanium dioxide, tetrabutyl titanate, titanium nitrate, and titanic acid.

In some embodiments, a solid-phase volume distribution coefficient (D_{V90}-D_{V10})/D_{V50} in the slurry mixture is 1.8 to 3.0.

In some embodiments, the solid-phase volume distribution coefficient (D_{V90}-D_{V10})/D_{V50} in the slurry mixture is optionally 1.8, 1.9, 2.0, 2.1, 2.2, 2.3, 2.4, 2.5, 2.6, 2.7, 2.8, 2.9, 3.0, or a range defined by any two of these values.

The solid-phase volume distribution coefficient in the slurry mixture being within the above range indicates a uniform particle size distribution of the raw material, which facilitates uniform solid-phase reactions during subsequent sintering, and reducing the risks of localized concentration of reducing materials, increase in reducibility, and aggregation of magnetic materials due to uneven mixing of raw materials.

In some embodiments, a volume distribution particle size D_{V50} of the precursor powder is 5 µm to 60 µm.

In some embodiments, the precursor powder is obtained by spray-drying of the slurry mixture.

In some embodiments, the sintering is one-time sintering, including at least two constant-temperature stages. A constant temperature in the first constant-temperature stage is 400°C to 500°C, with a constant-temperature duration of 3 h to 8 h. A highest constant temperature of the one-time sintering is 770°C to 820°C, where a constant-temperature treatment is performed at the highest temperature for 8 h to 15 h.

In some embodiments, the highest constant temperature of the one-time sintering is optionally 770°C, 780°C, 790°C, 800°C, 810°C, 820°C, or a range defined by any two of these values.

In some embodiments, the constant-temperature treatment is performed at the highest temperature for 8 h, 9 h, 10 h, 11 h, 12 h, 13 h, 14 h, 15 h, or a range defined by any two of these values.

High-temperature sintering within the above temperature range helps to increase the particle size of the positive electrode active material, allowing for a certain area proportion of large particles having a particle size of 1 µm or more in the cross section of the positive electrode film layer in the thickness direction of the electrode plate, increasing the compaction density of the electrode plate, also reducing the increase in reducing atmosphere caused by an excessively high sintering temperature, and controlling the possibility of generation of magnetic materials such as Fe₂P, thereby ensuring both the energy density and storage stability of the battery.

In some embodiments, the sintering is performed at least twice. A primary sintered product is obtained after the first sintering, and the second sintering is performed after the primary sintered product is ground.

In some embodiments, a sintering temperature of the first sintering is 720°C to 780°C, and a sintering time is 6 h to 12 h.

In some embodiments, the sintering temperature of the first sintering is optionally 720°C, 730°C, 740°C, 750°C, 760°C, 770°C, 780°C, or a range defined by any two of these values.

In some embodiments, the sintering time of the first sintering is optionally 6 h, 7 h, 8 h, 9 h, 10 h, 11 h, 12 h, or a range defined by any two of these values.

In some embodiments, a sintering temperature of the second sintering is 770°C to 830°C, and a sintering time is 6 h to 12 h.

In some embodiments, the sintering temperature of the second sintering is optionally 770°C, 780°C, 790°C, 800°C, 810°C, 820°C, 830°C, or a range defined by any two of these values.

In some embodiments, the sintering time of the second sintering is optionally 6 h, 7 h, 8 h, 9 h, 10 h, 11 h, 12 h, or a range defined by any two of these values.

In some embodiments, the second sintering performed after the primary sintered product is ground includes: adding a carbon source to the primary sintered product and grinding them separately, where the D_{V50} of the first group of ground particles is 1.40 µm to 2.0 µm, and the D_{V50} of the second group of ground particles is 0.35 µm to 0.45 µm; mixing the first group of ground particles with the second group of ground particles at a mass ratio of 30:70 to 70:30 to obtain mixed intermediate particles; and performing the second sintering on the mixed intermediate particles.

In some embodiments, the second sintering performed after the primary sintered product is ground includes: adding a carbon source to the primary sintered product and grinding them separately, where the D_{V50} of the first group of ground particles is optionally 1.4 µm, 1.45 µm, 1.5 µm, 1.55 µm, 1.6 µm, 1.65 µm, 1.7 µm, 1.75 µm, 1.8 µm, 1.9 µm, 2 µm, or a range defined by any two of these values.

In some embodiments, the second sintering performed after the primary sintered product is ground includes: adding a carbon source to the primary sintered product and grinding them separately, where the D_{V50} of the second group of ground particles is optionally 0.35 µm, 0.36 µm, 0.37 µm, 0.38 µm, 0.39 µm, 0.4 µm, 0.41 µm, 0.42 µm, 0.43 µm, 0.44 µm, 0.45 µm, or a range defined by any two of these values.

In some embodiments, the first group of ground particles and the second group of ground particles may be mixed at a mass ratio of 30:70, 40:60, 50:50, 60:40, or 70:30 to obtain mixed intermediate particles.

The double-sintering process can effectively shorten the sintering time of the high-temperature stage, thereby reducing the risk and possibility of generation of magnetic materials during high-temperature sintering. The activity of the particles can be controlled by adjusting the particle sizes of the two groups of ground particles during the second sintering. This allows the positive electrode active material to have large particles with a certain area proportion, increasing the compaction density of the electrode plate and improving the energy density of the lithium-ion secondary battery as well as allowing the battery to maintain a low self-discharge level, so that the energy density of the lithium-ion secondary battery is maintained for a long time during storage and cycling.

A fifth aspect of the present application provides a method for preparing a positive electrode plate. The method includes: sequentially adding a binder, a conductive agent, and a positive electrode active material prepared using the method provided by the fourth aspect, dry-mixing the same, adding a solvent, stirring the resulting mixture to obtain a slurry product, transfer-coating the slurry product onto at least one side of a current collector, and then performing drying and hot pressing to obtain a positive electrode plate.

In some embodiments, the hot pressing includes at least three times of hot rolling. A hot rolling pressure increases sequentially. The hot rolling pressures are sequentially 20 tons to 50 tons, 50 tons to 70 tons, and 70 tons to 90 tons. A hot rolling temperature is 40°C to 80°C. Before the first hot rolling for compaction, the electrode plate is heated, and the heating is performed at a temperature of 40°C to 50°C.

In these examples of the present application, a positive electrode active material prepared by using the above hot pressing process in combination with the method according to the fourth aspect effectively increases the compaction density of the positive electrode plate while maintaining a low content of the magnetic material, allowing the battery to have improved energy density while maintaining low self-discharge.

In some embodiments, the transfer-coating is performed at a speed of 1 m/min to 25 m/min. In some embodiments, the transfer-coating is performed at a speed which is optionally 1 m/min, 2 m/min, 3 m/min, 4 m/min, 5 m/min, 6 m/min, 7 m/min, 8 m/min, 9 m/min, 10 m/min, 11 m/min, 12 m/min, 13 m/min, 14 m/min, 15 m/min, 16 m/min, 17 m/min, 18 m/min, 19 m/min, 20 m/min, 21 m/min, 22 m/min, 23 m/min, 24 m/min, 25 m/min, or a range defined by any two of these values.

The transfer-coating is performed at a speed within the above range, helping to improve the distribution uniformity of the particles during the coating process, reducing the risk of particle aggregation in the positive electrode film layer, and reducing the porosity of the cross section of the positive electrode film layer, thereby further increasing the maximum compaction density of the electrode plate, and improving the energy density of the battery.

In addition, the present application further provides a power consuming apparatus. The power consuming apparatus includes at least one of the lithium-ion secondary battery provided in the present application, a battery module, a battery pack, and an energy storage battery. The lithium-ion secondary battery, the battery module, or the battery pack may be used as a power supply of the power consuming apparatus, and may also be used as an energy storage unit of the power consuming apparatus. The power consuming apparatus may include, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf cart, or an electric truck), an electric train, ship, and satellite, and an energy storage system.

Whether to use the lithium-ion secondary battery, the battery module, or the battery pack may be determined according to use requirements of the power consuming apparatus.

FIG. 7 shows a power consuming apparatus as an example. The power consuming apparatus is a battery electric vehicle, a hybrid electric vehicle, a plug-in hybrid electric vehicle, or the like. To satisfy requirements of the power consuming apparatus for high power and high energy density of the secondary battery, a battery pack or a battery module may be used.

As another example, the apparatus may be a mobile phone, a tablet computer, a notebook computer, or the like. The apparatus is generally required to be light and thin, and may use a secondary battery as a power source.

### Examples

Examples of the present application are described below. The examples described below are exemplary, and are only intended to explain the present application rather than being construed as a limitation to the present application. Examples whose techniques or conditions are not specified are made in accordance with techniques or conditions described in literature in the art or made in accordance with product instructions. The reagents or instruments used are all conventional products that are commercially available if no manufacturer is indicated.

### Example 1

### (1) Preparation of positive electrode active material

Lithium carbonate, iron phosphate, titanium dioxide, glucose, and polyethylene glycol were added to water and mixed in a premixing tank at a rotating speed of 1400 rpm, and the resulting mixture was demagnetized using a demagnetizing rod with a magnetic field intensity of 10000 Gs. A ratio of the lithium carbonate to the iron phosphate allowed for a molar ratio of 1.03:1.0 of lithium to iron. A mass content of the glucose relative to a total mass of raw materials was 6%. A mass content of the polyethylene glycol relative to the total mass of the raw materials was 5%. After uniform mixing, a raw material mixture with a solid content of 40% was obtained.

In the lithium carbonate, a quantity of magnetic material particles was less than or equal to 500 pcs/kg, a material particle size D_{V10} was greater than or equal to 1 µm, a particle size D_{V50} was 6 µm, and a particle size D_{V90} was less than or equal to 40 µm. In the iron phosphate, a quantity of magnetic material particles was less than or equal to 95 pcs/kg, and the particles had an approximately spherical morphology. In the glucose, a quantity of magnetic material particles was less than or equal to 500 pcs/kg. The polyethylene glycol had a molecular weight of 1500, and a quantity of magnetic material particles was less than or equal to 150 pcs/kg.

The raw material mixture was subjected to two grinding-demagnetization cycles in a sand mill. After coarse grinding was performed for 1 h, a coarsely ground material was demagnetized using a permanent magnetic iron remover with a demagnetization intensity of greater than or equal to 8000 Gs. The demagnetized material was then finely ground, with a slurry temperature being controlled to be less than 40°C during grinding, to obtain a slurry mixture, where a solid-phase particle size D_{V}50 in the slurry mixture was 0.35 µm. Spray drying was performed to obtain dried precursor powder, with a D50 of 55.0 µm after drying. A magnetic material was less than or equal 70 pcs/kg.

The precursor powder was subjected to two-stage heating and sintering in a nitrogen atmosphere to obtain a lithium iron phosphate positive electrode material. The temperature was raised from 25°C to 450°C at a temperature rise rate of 2°C/min (a first temperature-rise stage), and held for 3 h. The temperature was then raised from 450°C to 780°C at a temperature rise rate of 5°C/min (a second temperature-rise stage), and held for 12 h. A gas flow rate during the temperature-rise stages was greater than that during a constant-temperature stage, where a ratio of the gas flow rates was 1.5:1, and a total gas flow rate was 1350 cm³/h. After that, the temperature was reduced. Airflow pulverization was performed to obtain a carbon-coated lithium iron phosphate material with a D_{V}50 of 1.0 µm to 2.0 µm.

The above D50, D_{V}50, and D_{V}90 refer to data obtained through a Malvern laser scattering test.

Based on a total mass of the positive electrode active material, a mass proportion of element carbon was 1.25%, and a mass proportion of element titanium was 4000 ppm. A powder compaction density of the positive electrode active material under a pressure of 3T was 2.52 g/cm³, and a discharge gram capacity at room temperature at a discharge rate of 1 C was 141.4 mAh/g. A discharge capacity proportion η of the positive electrode active material discharged to 3.2 V was 92.5%.

### (2) Preparation of positive electrode plate

2.2 wt% of PVDF, 0.8 wt% of conductive carbon black, and 97.0 wt% of the positive electrode active material were sequentially added and dry-mixed, and then added with N-methylpyrrolidone, followed by stirring and viscosity adjustment, to obtain a slurry product. The slurry product was transfer-coated onto a base coating on an aluminum foil current collector. The base coating included carbon black and PVDF at a mass ratio of 1:1. In the base coating, a distribution density of carbon-based particles having a particle size greater than 100 nm in the base coating was less than or equal to 10 pcs/10 µm, and a thickness of the base coating was 2 µm. Drying and hot pressing were performed to obtain a positive electrode film layer of which the areal density on each side was 350 mg/1540 cm². The transfer-coating was performed at a speed of 20 m/min.

A hot pressing process included three hot rolling processes, with a hot rolling pressure increasing sequentially. The hot rolling pressures were respectively 40 tons, 60 tons, and 80 tons. A hot rolling temperature was 60°C. Before the first hot rolling for compaction, the electrode plate was heated, and the heating was performed at a temperature of 40°C.

A compaction density of the electrode plate was a maximum compaction density of the electrode plate. For a test method of the maximum compaction density of the electrode plate, reference is made to the following description. In this example, the maximum compaction density of the electrode plate was 2.63 g/cm³.

In a cross section of the positive electrode film layer in a thickness direction of the electrode plate, an area proportion of particles having a particle size of 1 µm to 5 µm was 30%. In the cross section of the positive electrode film layer in the thickness direction of the electrode plate, an average equivalent area proportion of particles having a particle size of 1 µm or more was 0.127%. In the cross section of the positive electrode film layer in the thickness direction of the electrode plate, an area proportion of particles having a particle size of 50 nm to 200 nm was 6.34%. In the positive electrode film layer, a mass content of a magnetic material was 20 ppm, and a mass content of elemental iron was 0 (below a detection limit, recorded as 0). In a cumulative distribution curve of graphitization degree C values of the positive electrode film layer obtained in a surface scanning mode of a laser micro-confocal Raman spectrometer, a median C₅₀ of the graphitization degree was 1.00, a median L_{A50} of a sphericity of the particles in the positive electrode film layer was 0.715, and a porosity of the cross section of the positive electrode film layer was 15.991%.

### (3) Preparation of negative electrode plate

95.5 wt% of a negative electrode active material (artificial graphite), 1.0 wt% of a conductive agent (conductive carbon black), 2.0 wt% of a binder (styrene-butadiene rubber (SBR)), and 1.5 wt% of a thickener (sodium carboxymethyl cellulose (CMC)) were mixed, and the resulting mixture was added with deionized water, followed by stirring and dispersion, to obtain a negative electrode slurry. The negative electrode slurry was then coated onto both sides of a Cu foil. After both sides were coated, drying, compaction, slitting, and cutting were performed to obtain a negative electrode plate. An areal density of each coated side was 164 mg/1540.25 cm², and a compaction density was 1.60 g/cm³.

### (4) Preparation of separator

### A polypropylene film was used as a separator.

### (5) Preparation of electrolyte solution

In an argon atmosphere glove box (H₂O < 0.1 ppm, and O₂ < 0.1 ppm), organic solvents ethylene carbonate (EC) and dimethyl carbonate (DMC) were uniformly mixed at a volume ratio of 1:1. A lithium salt LiPF₆ was added and dissolved in the organic solvents. A content of LiPF₆ in the solution was 1 mol/L. Then the solution was uniformly stirred to obtain an electrolyte solution.

### (6) Preparation of battery

The positive electrode plate, the separator, and the negative electrode plate were stacked in order, with the separator capable of isolating an anode from a cathode, and then wound to obtain a bare cell. The bare cell was placed in an outer package, and the electrolyte solution was injected, followed by processes such as sealing, formation, and degassing to ultimately obtain a lithium-ion secondary battery.

### Example 2

A preparation method of Example 2 was essentially the same as that of Example 1, except that the sintering process of the positive electrode active material was different, which was specifically as follow.

The precursor powder was subjected to two-stage heating and sintering in a nitrogen atmosphere to obtain a lithium iron phosphate positive electrode material. The temperature was raised from 25°C to 450°C at a temperature rise rate of 2°C/min (a first temperature-rise stage), and held for 3 h. The temperature was then raised from 450°C to 800 °C at a temperature rise rate of 5°C/min (a second temperature-rise stage), and held for 12 h. A gas flow rate during the temperature-rise stages was greater than that during a constant-temperature stage, where a ratio of the gas flow rates was 1.5:1, and a total gas flow rate was 1350 cm³/h. After that, the temperature was reduced. Airflow pulverization was performed to obtain a carbon-coated lithium iron phosphate material with a D_{V}50 of 1.0 µm to 2.0 µm.

### Example 3

A preparation method of Example 3 was essentially the same as that of Example 1, except that the sintering process of the positive electrode active material was different, which was specifically as follow.

The precursor powder was subjected to two-stage heating and sintering in a nitrogen atmosphere to obtain a lithium iron phosphate positive electrode material. The temperature was raised from 25°C to 450°C at a temperature rise rate of 2°C/min (a first temperature-rise stage), and held for 3 h. The temperature was then raised from 450°C to 820 °C at a temperature rise rate of 5°C/min (a second temperature-rise stage), and held for 12 h. A gas flow rate during the temperature-rise stages was greater than that during a constant-temperature stage, where a ratio of the gas flow rates was 1.5:1, and a total gas flow rate was 1350 cm³/h. After that, the temperature was reduced. Airflow pulverization was performed to obtain a carbon-coated lithium iron phosphate material with a D_{V}50 of 1.0 µm to 2.0 µm.

### Example 4

The preparation method of Example 4 was essentially the same as that of Example 1, except that an amount of the titanium source added during the preparation of the positive electrode active material was adjusted so that a mass content of element titanium was 2500 ppm based on the mass of the positive electrode active material.

### Example 5

The preparation method of Example 5 was essentially the same as that of Example 1, except that an amount of the titanium source added during the preparation of the positive electrode active material was adjusted so that a mass content of element titanium was 1500 ppm based on the mass of the positive electrode active material.

### Example 6

The preparation method of Example 6 was essentially the same as that of Example 1, except that the preparation process of the positive electrode active material was slightly different, with the specific differences including the following two points.
(1) The carbon source in the raw material mixture was only glucose, where a mass percentage of the glucose relative to a mass of the iron phosphate was 5.7 wt%.
(2) The heating and sintering process was different. The precursor powder was sintered at least twice in a nitrogen atmosphere. The first sintering was performed at a temperature of 750°C, with the temperature being held for 8 h, to obtain a primary sintered product.

1.5 wt% (based on a mass of the primary sintered product) of glucose, 3.0 wt% (based on the mass of the primary sintered product) of polyethylene glycol, and a titanium source were added to the primary sintered product, the resulting mixture was uniformly ground, and then divided into two groups for a second time of grinding. Grinding parameters for the two groups were different, where the D_{V}50 of the particles obtained after the first group was ground was controlled to be 2.0 µm, and the D_{V}50 of the particles obtained after the second group was ground was controlled to be 0.35 µm. The particles obtained after the first group and the second group were ground were mixed at a mass ratio of 30:70, spray-dried, and sintered for the second time. The second time of sintering was performed at a temperature of 800°C, and the temperature was held for 10 h.

A ratio of element titanium of the titanium source in the raw material mixture to element titanium of the titanium source added to the primary sintered product was 5:2. Based on the total mass of the positive electrode active material, a mass proportion of element titanium was 6000 ppm.

### Example 7

The preparation method of Example 7 was essentially the same as that of Example 6, except that
the D_{V}50 of the particles obtained after the first group was ground was 1.50 µm, and the D_{V}50 of the particles obtained after the second group was ground was 0.40 µm. The particles obtained after the first group and the second group were ground were mixed at a mass ratio of 70:30, spray-dried, and sintered for the second time.

### Comparative Example 1

The preparation method of Comparative Example 1 was essentially the same as that of Example 1, except that the following methods differed in the preparation process of the positive electrode active material:
The raw material mixture was subjected to two grinding-demagnetization cycles in a sand mill. After coarse grinding was performed for 1 h, a coarsely ground material was demagnetized using a permanent magnetic iron remover with a demagnetization intensity of greater than or equal to 8000 Gs. The demagnetized material was then finely ground, with a slurry temperature being controlled to be less than 40°C during grinding, to obtain a slurry mixture, where a solid-phase particle size D_{V}50 in the slurry mixture was 0.5 µm. Spray drying was performed to obtain dried precursor powder.

The precursor powder was subjected to two-stage heating and sintering in a nitrogen atmosphere to obtain a lithium iron phosphate positive electrode material. The temperature was raised from 25°C to 450°C at a temperature rise rate of 2°C/min (a first temperature-rise stage), and held for 3 h. The temperature was then raised from 450°C to 765 °C at a temperature rise rate of 5°C/min (a second temperature-rise stage), and held for 12 h. A gas flow rate during the temperature-rise stages was greater than that during a constant-temperature stage, where a ratio of the gas flow rates was 1:1, and a total gas flow rate was 1350 cm³/h. After that, the temperature was reduced. Airflow pulverization was performed to obtain a carbon-coated lithium iron phosphate material with a D_{V}50 of 1.0 µm to 2.0 µm.

### Comparative Example 2

The preparation method of Comparative Example 2 was essentially the same as that of Example 1, except that the following method was different in the preparation process of the positive electrode active material.

Lithium carbonate, iron phosphate, titanium dioxide, glucose, and polyethylene glycol were added to water and mixed in a premixing tank at a rotating speed of 1400 rpm, and the resulting mixture was demagnetized using a demagnetizing rod with a magnetic field intensity of 8000 Gs to 12000 Gs. A ratio of the lithium carbonate to the iron phosphate allowed for a molar ratio of 1.05:1.0 of lithium to iron. A mass content of the glucose relative to a total mass of raw materials was 6%. A mass content of the polyethylene glycol relative to the total mass of the raw materials was 5%. After uniform mixing, a raw material mixture with a solid content of 40% was obtained.

The raw material mixture was subjected to two grinding-demagnetization cycles in a sand mill. After coarse grinding was performed for 1 h, a coarsely ground material was demagnetized using a permanent magnetic iron remover with a demagnetization intensity of greater than or equal to 8000 Gs. The demagnetized material was then finely ground, with a slurry temperature being controlled to be less than 40°C during grinding, to obtain a slurry mixture, where a solid-phase particle size D_{V}50 in the slurry mixture was 0.35 µm. Spray drying was performed to obtain dried precursor powder, with a D50 of 50 µm to 60 µm after drying. A magnetic material was less than or equal 70 pcs/kg.

The precursor powder was subjected to two-stage sintering in a nitrogen atmosphere to obtain a lithium iron phosphate positive electrode material. The temperature was raised from 25°C to 450°C at a temperature rise rate of 2°C/min (a first temperature-rise stage), and held for 3 h. The temperature was then raised from 450°C to 820 °C at a temperature rise rate of 5°C/min (a second temperature-rise stage), and held for 12 h. A gas flow volume ratio of the temperature-rise stages to a constant-temperature stage was 1:1, and a total gas flow rate was 900 cm³/h. After that, the temperature was reduced. Airflow pulverization was performed to obtain a carbon-coated lithium iron phosphate material with a D_{V}50 of 1.0 µm to 2.0 µm.

### Performance test

### 1. Self-discharge K value test

At 25°C, a battery was charged at a constant current of 0.05 C to 3.0 V, charged at a constant voltage to a current of 0.05 C, and left standing at 25°C for 24 h. Then, an open-circuit voltage V1 was tested, measured in V. The battery was left standing again for 24 h, and then an open-circuit voltage V2 was tested again, measured in V. A self-discharge K value was calculated as 1000 × (V1 - V2) / 48, measured in mV/h.

### 2. DCR test

At 25°C, the battery was charged at a constant current of 0.33 C to 3.65 V, charged at a constant voltage to a current of 0.05 C, discharged at 0.33 C to 20% SOC, left standing for 5 min, discharged at a 3 C pulse for 30 s, left standing for 40 s, charged at 3 C for 40 s, left standing for 5 min, charged at a constant current of 0.33 C to 3.65 V, charged at a constant voltage to 0.05 C, discharged at 0.33 C to 10% SOC, left standing for 5 min, discharged at a 3 C pulse for 30 s, left standing for 40 s, charged at 3 C for 40 s, left standing for 5 min, fully charged at 0.33 C, discharged at 0.33 C to 50% SOC, left standing at -25°C for 2 h, discharged at a 1 C pulse for 30 s, left standing for 10 min, left standing at 25°C for 2 h, charged at a constant current of 0.33 C to 3.65 V, charged at a constant voltage to 0.05 C, discharged at 0.33 C to 20% SOC, left standing at -25°C for 2 h, discharged at a 1 C pulse for 30 s, and left standing for 10 min.

The voltage was recorded before and after each pulse discharge, and the DCRs under different conditions were calculated using a calculation formula: DCR = (voltage before pulse discharge and after standing - voltage after pulse discharge) / pulse current.

### 3. Maximum compaction density test for electrode plate

An electrode plate with both sides coated was compacted using a rolling press, an elongation of the compacted electrode plate was tested, and the flexibility of the compacted electrode plate was evaluated as well. By increasing a pressure of the rolling press, electrode plates with different compaction densities were obtained. As the pressure increased, the compaction density of the electrode plate increased, the elongation of the electrode plate increased, and the flexibility of the electrode plate decreased. An excessively high elongation of the electrode plate easily causes warping of the electrode plate, while excessively low flexibility of the electrode plate easily leads to brittle fracture of the electrode plate. Therefore, a maximum compaction density of the electrode plate is defined as a smaller one of the compaction densities corresponding to an elongation of 8% of the electrode plate or a flexibility folding number of 3 of the electrode plate.

The compaction density was calculated by dividing the mass of the positive electrode film layer by a volume of the positive electrode film layer.

### 4. Elongation test

The electrode plate was laid flat on a horizontal tabletop, and the electrode plate was cut into segments, where each segment of electrode plate has a length of approximately 100 cm. A base material copper foil at an edge of the electrode plate was removed, ensuring that the cut edge of the electrode plate was parallel to an MD direction of the electrode plate (perpendicular to a direction of a press roller) and ensuring that the electrode plate was completely covered with a coating. A steel ruler was used to measure a length between marked points at the same width positions in a length direction at the start and tail of the electrode plate, where the length was estimated to 0.1 mm, and a length before compaction was recorded. After compaction, a length between the corresponding marked points after compaction was recorded, and an elongation of the electrode plate was calculated as (length after compaction - length before compaction) / length before compaction.

### 5. Flexibility folding number test

The positive electrode plate was cut into a test sample having a size of 20 × 100 mm². The sample was folded forward, flattened with a 2 kg press roller, and unfolded for checking, in a direction facing light, whether light is transmitted through a gap. If no light transmission occurred, the sample was folded reversely, flattened with the 2 kg press roller, and checked again in the direction facing light. This process was repeated until light is transmitted through the gap, and a folding number was recorded. The test was repeated three times, and an average value was taken as reference data for the flexibility of the electrode plate.

### Test results

**Table 1**

| | Area proportio n of particles having particle size greater than or equal to 1 µm | Average equivalen t area proportio n of particles having particle size of 1 µm or more | Mass content of magneti c material (ppm) | Content of elementa 1 Fe (ppm*) | Mass content of elemen t titaniu m (ppm) | Maximum compactio n density of electrode plate (g/cm³) | Compactio n density of electrode plate after battery is fully discharged (g/cm³) | Gram capacit y button battery at 1 C (mAh/g) | Self-discharg e K value (mV/h) | DCR at 25°C at 20% SOC (mΩ ) | DCR at 25°C at 10% SOC (mΩ ) | DCR at - 25°C at 50% SOC (mΩ ) | DCR at - 25°C at 20% SOC (mΩ ) |
|---|---|---|---|---|---|---|---|---|---|---|---|---|---|
| Example 1 | 30% | 0.127% | 20 | 0 | 4000 | 2.63 | 2.51 | 141.4 | 0.54 | 45.1 | 84.4 | 357. 8 | 444. 8 |
| Example 2 | 40.98% | 0.138% | 134.2 | 0.5 | 4000 | 2.65 | 2.53 | 138.8 | 0.56 | 47.0 | 87.6 | 372. 4 | 460. 4 |
| Example 3 | 46.35% | 0.156% | 1061.7 | 10.1 | 4000 | 2.68 | 2.56 | 137.5 | 0.57 | 48.6 | 91.3 | 388. 9 | 482. 2 |
| Example 4 | 48.10% | 0.179% | 1450.2 | 14.3 | 2500 | 2.7 | 2.58 | 135.7 | 0.59 | 50.3 | 95.5 | 406. 4 | 500. 9 |
| Example 5 | 50% | 0.196% | 1980 | 18.4 | 1500 | 2.72 | 2.6 | 133.2 | 0.61 | 52.1 | 98.4 | 415. 4 | 521. 3 |
| Example 6 | 48.01% | 0.23% | 25.1 | 0 | 6000 | 2.65 | 2.53 | 130.1 | 0.56 | 54.4 | 104. 2 | 431. 5 | 556. 1 |
| Example 7 | 48.01% | 0.183% | 30.6 | 0 | 6000 | 2.73 | 2.61 | 135.2 | 0.55 | 50.2 | 97.7 | 402. 1 | 520. 2 |
| Comparativ e Example 1 | 24.67% | 0.047% | 20.9 | 0 | 4000 | 2.53 | 2.41 | 142.3 | 0.53 | 44.6 | 82.7 | 350. 6 | 431. 5 |
| Comparativ e Example 2 | 51.76% | 0.200% | 2190 | 25 | 1500 | 2.65 | 2.53 | 133.5 | 0.95 | 56.5 | 105. 6 | 444. 5 | 563. 0 |

*In the examples, 0 refers to a value below the detection limit, making it difficult to identify an exact content.

From the comparison between the examples and the comparative examples, it can be seen that in the cross section of the positive electrode film layer in the thickness direction of the electrode plate, an area proportion of particles having a particle size greater than or equal to 1 µm is 30% to 50%; and a mass proportion of a magnetic material in the positive electrode film layer is greater than or equal to 20 ppm and less than or equal to 1980 ppm. This helps the lithium-ion secondary battery to achieve a high compaction density of the electrode plate while maintaining a low self-discharge K value, enabling the battery to have both high energy density and good storage performance.

When the area proportion of the particles having a particle size of 1 µm to 5 µm in the cross section of the positive electrode film layer in the thickness direction of the electrode plate is 30% to 45%, the lithium-ion secondary battery achieves a high compaction density of the electrode plate while maintaining a low self-discharge K value, and meanwhile, exhibits good kinetic performance and high capacity.

Based on the total mass of the positive electrode active material, when the mass content of element titanium is 2500 ppm to 8000 ppm, the surface inertness of the titanium source can reduce the activity of the raw material, reducing the possibility of uneven local chemical reactions and generation of high-content magnetic materials. This also helps to control the average equivalent area proportion of the particles having a particle size of 1 µm or more, ensuring both the storage stability and kinetic performance of the lithium-ion secondary battery.

From the comparison between Examples 1, 2, 6, and 7 and other examples, it can be seen that the mass content of the magnetic material in the positive electrode film layer being 20 ppm to 200 ppm helps the lithium-ion secondary battery to maintain a high compaction density of the electrode plate as well as allows the battery to have a low self-discharge K value, so that the lithium-ion secondary battery has further improved kinetic performance while having both high energy density and good storage performance.

It should be noted that the present application is not limited to the above embodiments. The above embodiments are merely exemplary, and embodiments having substantially the same technical idea and the same effects within the scope of the technical solutions of the present application are all included in the technical scope of the present application. In addition, without departing from the essence of the present application, various modifications made to the embodiments that can be conceived of by a person skilled in the art, and other manners constructed by combining some of the constituent elements in the embodiments are also included in the scope of the present application.

## Claims

1. A lithium-ion secondary battery, comprising: a positive electrode plate, a negative electrode plate, and an electrolyte, wherein
the positive electrode plate comprises a positive electrode current collector and a positive electrode film layer disposed on at least one side of the positive electrode current collector;
the positive electrode film layer comprises a positive electrode active material, and the positive electrode active material comprises lithium-containing transition metal phosphate particles whose surfaces are at least partially provided with a carbon coating material;
in a cross section of the positive electrode film layer in a thickness direction of the electrode plate, an area proportion of particles having a particle size of greater than or equal to 1 µm is 30.0% to 50.0%; and
a mass proportion of a magnetic material in the positive electrode film layer is greater than or equal to 20 ppm and less than or equal to 1980 ppm.

2. The lithium-ion secondary battery according to claim 1, wherein in the cross section of the positive electrode film layer in the thickness direction of the electrode plate, an area proportion of particles having a particle size of 1 µm to 5 µm is 30.0% to 50.0%.

3. The lithium-ion secondary battery according to claim 1, wherein in the cross section of the positive electrode film layer in the thickness direction of the electrode plate, an area proportion of particles having a particle size of 1 µm to 5 µm is 30.0% to 45.0%.

4. The lithium-ion secondary battery according to claim 1, wherein in the cross section of the positive electrode film layer in the thickness direction of the electrode plate, an average equivalent area proportion of particles having a particle size of 1 µm or more is 0.05% to 0.20%.

5. The lithium-ion secondary battery according to claim 1, wherein in the cross section of the positive electrode film layer in the thickness direction of the electrode plate, an area proportion of particles having a particle size of 50 nm to 200 nm is 3.0% to 15.0%.

6. The lithium-ion secondary battery according to claim 1, wherein in the cross section of the positive electrode film layer in the thickness direction of the electrode plate, an area proportion of particles having a particle size of 50 nm to 200 nm is 5.0% to 12.0%.

7. The lithium-ion secondary battery according to claim 1, wherein in the cross section of the positive electrode film layer in the thickness direction of the electrode plate, an area proportion of particles having a particle size of 50 nm to 200 nm is 5.0% to 10.0%.

8. The lithium-ion secondary battery according to claim 1, wherein the mass proportion of the magnetic material in the positive electrode film layer is less than or equal to 300 ppm.

9. The lithium-ion secondary battery according to claim 8, wherein the mass proportion of the magnetic material in the positive electrode film layer is 20 ppm to 200 ppm.

10. The lithium-ion secondary battery according to claim 1, wherein
the magnetic material comprises one or more of Fe, Fe₂P, FeP, γ-Fe₂O₃, and Fe₂P₂O₇.

11. The lithium-ion secondary battery according to claim 1, wherein
a mass content of elemental iron in the positive electrode film layer is less than 20 ppm.

12. The lithium-ion secondary battery according to claim 11, wherein
the mass content of the elemental iron in the positive electrode film layer is less than or equal to 15 ppm.

13. The lithium-ion secondary battery according to claim 1, wherein the lithium-containing transition metal phosphate comprises a component represented by the following general formula:
LiₘFeₓP_{y}OⱼQ_{q},
wherein
Q comprises one or more of Al, Na, K, Mg, Cu, Mn, Cr, Zn, Pb, Ca, Co, Ni, Sr, Nb, V, Ti, B, S, Si, N, F, Cl, and Br, 0.8 ≤ m ≤ 1.15, 0.9 ≤ x ≤ 1, 0.95 ≤ y ≤ 1, 3.5 ≤ j ≤ 4, and 0 < q ≤ 0.1.

14. The lithium-ion secondary battery according to claim 1, wherein the positive electrode active material comprises element titanium, and based on a total mass of the positive electrode active material, a mass content of element titanium is 1500 ppm to 8000 ppm.

15. The lithium-ion secondary battery according to claim 14, wherein the positive electrode active material comprises element titanium, and based on the total mass of the positive electrode active material, a mass content of element titanium is 2500 ppm to 8000 ppm.

16. The lithium-ion secondary battery according to claim 14, wherein the positive electrode active material comprises element titanium, and based on the total mass of the positive electrode active material, the mass content of element titanium is 2500 ppm to 6000 ppm.

17. The lithium-ion secondary battery according to claim 1, wherein based on a total mass of the positive electrode active material, a mass proportion of element carbon is 0.9% to 1.8%.

18. The lithium-ion secondary battery according to claim 1, wherein in a cumulative distribution curve of graphitization degree C values of the positive electrode film layer that are obtained in a surface scanning mode of a laser micro-confocal Raman spectrometer, a median C₅₀ of the graphitization degrees is greater than or equal to 0.9 and less than or equal to 1.3, wherein the graphitization degree C value is I_{G}/I_{D}, I_{G} represents the intensity of a G peak at 1580±100 cm⁻¹ in a Raman spectrum, and I_{D} represents the intensity of a D peak at 1350±100 cm⁻¹ in the Raman spectrum.

19. The lithium-ion secondary battery according to claim 18, wherein in the cumulative distribution curve of the graphitization degree C values of the positive electrode film layer that are obtained in a surface scanning mode of a laser micro-confocal Raman spectrometer, the median C₅₀ of the graphitization degrees is 0.99 to 1.2.

20. The lithium-ion secondary battery according to claim 1, wherein in a cumulative sphericity area distribution curve of particles obtained from a cross section of the positive electrode film layer in the thickness direction of the electrode plate, a median L_{A50} of the sphericity is 0.60 to 0.85.

21. The lithium-ion secondary battery according to claim 20, wherein in the cumulative sphericity area distribution curve of the particles obtained from the cross section of the positive electrode film layer in the thickness direction of the electrode plate, the median L_{A50} of the sphericity is 0.65 to 0.80.

22. The lithium-ion secondary battery according to claim 1, wherein a powder compaction density of the positive electrode active material under a pressure of 3T is 2.48 g/cm³ to 2.76 g/cm³.

23. The lithium-ion secondary battery according to claim 22, wherein the powder compaction density of the positive electrode active material under the pressure of 3T is 2.58 g/cm³ to 2.76 g/cm³.

24. The lithium-ion secondary battery according to claim 1, wherein a discharge gram capacity of the positive electrode active material at room temperature at a discharge rate of 1C is 135 mAh/g to 150 mAh/g.

25. The lithium-ion secondary battery according to claim 1, wherein a discharge capacity proportion η of the positive electrode active material discharged to 3.2 V is greater than or equal to 85%, wherein η is defined as follows: at room temperature, a button battery comprising the positive electrode active material is charged and discharged twice at a constant current at a rate of 0.1C within a voltage range of 2.0 V to 3.75 V, and then charged and discharged once at a constant current at a rate of 1C; and during the charge-discharge test at the rate of 1C, a capacity value at the discharge voltage of 3.2 V is extracted and recorded as C1, a capacity value at the discharge voltage of 2.0 V is extracted and recorded as C2, and η=C1/C2, wherein a charging process comprises constant-voltage charging with a constant voltage of 3.75 V and a constant-voltage cutoff current of 50 µA.

26. The lithium-ion secondary battery according to claim 1, wherein the positive electrode film layer further comprises a binder and a conductive agent; and based on a total mass of the positive electrode film layer, a mass content of the positive electrode active material is 94% to 99.4%, a mass content of the binder is 0.5% to 3%, and a mass content of the conductive agent is 0.1% to 3%.

27. The lithium-ion secondary battery according to claim 1, wherein an areal density of the positive electrode film layer on each side is 300 mg/1540 mm² to 450 mg/1540 mm².

28. The lithium-ion secondary battery according to claim 1, wherein when the lithium-ion secondary battery is in a fully discharged state, a compaction density of the positive electrode film layer is 2.43 g/cm³ to 2.78 g/cm³.

29. The lithium-ion secondary battery according to claim 1, wherein when the lithium-ion secondary battery is in a fully discharged state, a compaction density of the positive electrode film layer is 2.50 g/cm³ to 2.75 g/cm³.

30. The lithium-ion secondary battery according to claim 1, wherein the positive electrode film layer satisfies at least one of the following conditions:
(1) when the lithium-ion secondary battery is in a fully discharged state, a compaction density of the positive electrode film layer is 2.43 g/cm³ to 2.78 g/cm³, and in the cross section of the positive electrode film layer in the thickness direction of the electrode plate, a porosity of the positive electrode film layer is 10% to 28%; and
(2) when the lithium-ion secondary battery is in a fully discharged state, a compaction density of the positive electrode film layer is 2.50 g/cm³ to 2.78 g/cm³, and in the cross section of the positive electrode film layer in the thickness direction of the electrode plate, a porosity of the positive electrode film layer is 10% to 22%.

31. The lithium-ion secondary battery according to claim 1, wherein the positive electrode plate comprises a base coating, the base coating is disposed between the positive electrode film layer and the current collector, and the base coating satisfies at least one of the following conditions:
(1) the base coating comprises carbon-based particles, and a distribution density of carbon-based particles having a particle size greater than 100 nm in the base coating is less than or equal to 10 pcs/10 µm;
(2) a compaction density of the positive electrode plate in a fully discharged state is greater than or equal to 2.4 g/cm³, and a thickness of the base coating on each side is 1 µm to 4 µm; and
(3) a compaction density of the positive electrode plate in a fully discharged state is greater than or equal to 2.5 g/cm³, and a thickness of the base coating on each side is 2 µm to 4 µm.

32. A battery apparatus, comprising the lithium-ion secondary battery according to any one of claims 1 to 31, wherein the battery apparatus comprises at least one of a battery module, a battery pack, and an energy storage battery.

33. A power consuming apparatus, comprising the lithium-ion secondary battery according to any one of claims 1 to 31.

34. A method for preparing a positive electrode active material, comprising: obtaining a raw material mixture comprising a carbon source, a lithium source, an iron source, and a phosphorus source, wherein a molar ratio of lithium to iron in the raw material mixture is greater than 1 and less than 1.05; grinding the raw material mixture to obtain a slurry mixture, wherein a solid-phase volume distribution particle size D_{V50} of the slurry mixture is 0.3 µm to 0.4 µm; drying the slurry mixture to obtain precursor powder; and sintering the precursor powder to obtain a positive electrode active material, wherein the sintering is performed in an inert gas atmosphere, with a total gas flow rate of 1100 m³/h to 1400 m³/h during the sintering process; the sintering comprises a temperature-rise stage and a constant-temperature stage, wherein an inert gas inflow rate v1 during the temperature-rise stage is higher than an inert gas inflow rate v2 during the constant-temperature stage; a temperature in the constant-temperature stage during the sintering is from 770°C to 830°C; and the positive electrode active material comprises lithium-containing transition metal phosphate particles whose surfaces are at least partially provided with a carbon coating material.

35. A method for preparing a positive electrode plate, comprising: sequentially adding a binder, a conductive agent, and a positive electrode active material prepared using the method according to claim 34, dry-mixing the same, adding a solvent, stirring the resulting mixture to obtain a slurry product, transfer-coating the slurry product onto at least one side of a current collector, and then performing drying and hot pressing to obtain a positive electrode plate.

36. The method according to claim 35, wherein the hot pressing comprises at least three times of hot rolling, a hot rolling pressure increases sequentially, the hot pressing pressures are sequentially 20 tons to 50 tons, 50 tons to 70 tons, and 70 tons to 90 tons, and a hot rolling temperature is 40°C to 80°C; and before the first hot rolling for compaction, the electrode plate is heated, and the heating is performed at a temperature of 40°C to 50°C.

37. The method according to claim 35, wherein the transfer-coating is performed at a speed of 1 m/min to 25 m/min.
